# EUROPÄISCHE PATENTSCHRIFT

(11) **EP 1 941 550 B1**
(45) Veröffentlichungstag und Bekanntmachung des Hinweises auf die Patenterteilung: **18.03.2009**
(21) Anmeldenummer: 06807487.1
(22) Anmeldetag: 23.10.2006
(51) Int. Cl.: H01L 31/042, H01L 31/048

(54) **SOLARSTROMSYSTEM MIT EINER MEHRZAHL VON PHOTOVOLTAIKMODULEN**
SOLAR POWER SYSTEM WITH A NUMBER OF PHOTOVOLTAIC MODULES
SYSTEME A ENERGIE SOLAIRE COMPRENANT UNE PLURALITE DE MODULES PHOTOVOLTAIQUES

(30) Priorität: 21.10.2005 DE 102005050883; 21.10.2005 DE 102005050884
(43) Veröffentlichungstag der Anmeldung: 09.07.2008
(60) Teilanmeldung: 09000471.4
(73) Patentinhaber: Systaic AG, 40213 Düsseldorf (DE)
(72) Erfinder: KAMP, Michael, Viktor, 40477 Düsseldorf (DE); REWIG, Thomas, 06886 Lutherstadt Wittenberg (DE); DIEFENBACH, Karl, Heinz, 52064 Aachen (DE); TIBITANZL, Johannes, 97262 Erbshausen (DE)
(74) Vertreter: Blasberg, Tilo
(86) Internationale Anmeldenummer: PCT/EP2006/067681
(87) Internationale Veröffentlichungsnummer: WO 2007/045695

(56) Entgegenhaltungen:
- EP-A1- 0 500 066
- EP-A1- 0 999 601
- EP-A2- 0 977 274
- WO-A-01/75377
- US-A- 5 571 338

## Beschreibung

Die vorliegende Anmeldung beansprucht die Prioritäten der Deutschen Patentanmeldungen DE 10 2005 050 884.7 "Photovoltaikmodul, Verfahren zu dessen Herstellung sowie System mit mehreren Photovoltaikmodulen", angemeldet am 21. Oktober 2005, und DE 10 2005 050 883.9 "Solarstromsystem mit einer Mehrzahl von Photovoltaikmodulen", angemeldet am 21. Oktober 2005, deren Inhalt hiermit im Wege der Bezugnahme ausdrücklich in der vorliegenden Anmeldung mit aufgenommen sei.

### Gebiet der Erfindung

Die vorliegende Erfindung betrifft allgemein Photovoltaikmodule mit einem Halterahmen, beispielsweise zur Verwendung für die Gestaltung von Dacheindeckungen oder Fassadenflächen, und betrifft insbesondere ein Solarstromsystem mit einer Mehrzahl von Photovoltaikmodulen.

### Hintergrund der Erfindung

Photovoltaikmodule der vorgenannten Art wandeln Strahlungsenergie in elektrische Energie. Um den vielfältigen Anforderungen bei der Erstellung von Solaranlagen gerecht zu werden, werden die Solarzellen in einem Verbund aus mehreren Materialien und Bauteilen eingebettet, der insbesondere für eine praxisgerechte elektrische Anschlussmöglichkeit, für einen Schutz der nicht korrosionsbeständigen Solarzellen vor mechanischen Einflüssen, für einen Schutz von Witterungseinflüssen, für einen Berührungsschutz der elektrisch leitenden Bauteile und für eine einfache Handhabungs- und Befestigungsmöglichkeit sorgen soll. Damit Photovoltaikmodule einfach und flexibel verbaut werden können, beispielsweise auch durch ungelernte Arbeitskräfte, sind auf diesem stark wachsenden technischen Gebiet einfache und robuste Montage- und Verbindungskonzepte gefragt.

Um eine ausreichende mechanische Abstützung zu ermöglichen, ist aus dem Stand der Technik bekannt, ein Photovoltaikmodul in einem mechanisch stabilen Rahmen aus Aluminium oder Kunststoff aufzunehmen und zwischen Rahmen und dem Laminat aus Glas/Solarzellen/Folienverbund ein geeignetes Dichtungs- oder Weichlagerungsmaterial vorzusehen.

US 5,578,142 bzw. US 6,172,295 B1 offenbaren ein Kunststoff-Rahmenprofil zur Aufnahme eines Photovoltaikmoduls. Zwischen Kunststoffrahmen und einem Verbund aus transparenter Abdeckscheibe und Solarzellen ist eine Klebe- bzw. Haftschicht aus einem Kunststoff durch ein Spritzgussverfahren eingebracht. An einem unteren Auflageschenkel des Halterahmens sind Bohrungen zur Montage des Photovoltaikmoduls vorgesehen. Die dichtende Aufnahme des Materialverbunds aus transparenter Abdeckscheibe und Solarzellen in dem Halterahmen ist dennoch vergleichsweise aufwendig.

Um für eine einfache Rahmenhalterung zu sorgen, versucht man deshalb seit langem, die Rahmenabdichtung aus einem Kunststoff auszubilden, der in geeigneter Weise an den Rand eines Photovoltaikmoduls angespritzt bzw. angeschäumt oder angegossen wird. Dieser Lösungsansatz wird beispielsweise allgemein in der deutschen Offenlegungsschrift DE 28 32 475 beschrieben.

Ein weiterer Lösungsansatz wird in der US 4,830,038 und der entsprechenden US 5,008,062 offenbart. Eine Solarzelle wird gemeinsam mit einer transparenten Abdeckscheibe in eine Spritzgussform eingebracht, die so ausgelegt ist, dass durch Spritzgießen ein das Photovoltaikmodul umgreifender Rahmen ausgebildet wird. Als Material wird insbesondere Polyurethan offenbart. In den Kunststoffrahmen können gleichzeitig auch elektrische Verbindungsmittel, nämlich Steckverbinder, durch Spritzgießen integriert werden. Für die Zeit nach der Montage müssen Kräfte, insbesondere hervorgerufen durch Windsog, einkalkuliert werden, für deren Übertragung zum mechanischen Verbindungsmittel der Kunststoffrahmen alleine nur schwer sorgen kann. Ferner sind zur Montage eines solchen Photovoltaikmoduls zusätzliche Befestigungselemente erforderlich. Ein solches Photovoltaikmodul wird deshalb üblicherweise in einem Aluminium- oder Kunststoffrahmen verbaut, was die Kosten weiter erhöht.

US 5,743,970 offenbart ein weiteres Photovoltaikmodul, bei dem auf die Rückseite der Solarzellen ein Polymer angespritzt wird, um das Modul einzukapseln. Offenbart ist auch, dass die Kunststoff-Rückseite geeignete Strukturen, beispielsweise ein Gehäuse, ausbilden kann.

Photovoltaikmodule, die aus einem mehrschichtigen Verbundkörper bestehen, werden ferner in DE 198 14 652 A1, DE 198 14 653 A1 und DE 202 20 444 U1 offenbart. Mindestens eine Schicht besteht dabei aus einem Polycarbonat und mindestens eine weitere Schicht aus einem fluorhaltigen Polymer.

DE 101 05 718 B4 offenbart ein Solarstromsystem. U-förmige Tragprofile bilden eine Tragstruktur, in die die Photovoltaikmodule vertikal oder schräg hängend montiert werden können. Auf der Rückseite der Photovoltaikmodule sind Einhänghaken angeordnet, die in den Bolzen eines Tragprofils eingreifen. Ferner sind an der Rückseite der Photovoltaikmodule Anschlussstecker vorgesehen, Beim Einhängen der Photovoltaikmodule in die Tragprofile werden im Rahmen des Montagevorgangs zusammensteckbare Verbindungsstecker zur elektrischen Verschaltung der Photovoltaikmodule zusammengesteckt. In den Steckerkörpern oder in einer zugeordneten Anschlussdose kann eine Bypass-Diode aufgenommen werden. Das Einhängen der Photovoltaikmodule in die Tragprofile ist jedoch insbesondere bei flacher oder geneigter Ausrichtung der Photovoltaikmodule unzweckmäßig. Die Kraft, mit der die Verbindungsstecker zusammengesteckt werden, kann nicht exakt vorgegeben werden.

DE 41 40 683 A1 und DE 41 40 682 A1 offenbaren ein Solarstromsystem, bei dem die Photovoltaikmodule einen aus einem Kunststoff ausgebildeten Halterahmen aufweisen, der an allen vier Seiten einen Verbindungsflansche aufweist, auf deren Auflagefläche als Vertiefungen ausgebildete Stecker vorgesehen sind. Zur Verbindung der Photovoltaikmodule dienen Leisten, welche die Verbindungsflansche teilweise überdecken und eine Kontaktstiftanordnung aufweisen, die in den zugeordnete Stecker eines benachbarten Photovoltaikmoduls eingreifen. In den Leisten sind Durchgangsbohrungen vorgesehen, die von Schrauben zur Verbindung mit einer Dach- oder Fassadenkonstruktion durchgriffen werden. Die Verbindungsflansche erfordern jedoch eine gewisse Breite, was zu einem geringen Wirkungsgrad des Systems führt. Die Montage des Systems ist vergleichsweise aufwändig, da die Leisten festgeschraubt werden müssen.

WO 99/63193 offenbart eine Befestigungsvorrichtung für Photovoltaikmodule, wobei die Photovoltaikmodule zwischen zwei Klemmelementen gehalten sind. Für eine spannungsfreie Halterung der Photovoltaikmodule sind eine Überwurfglocke und ein dauerelastisches Federglied in Form einer Einlage vorgesehen, wodurch eine Relativbewegung des Photovoltaikmoduls relativ einem der Klemmelemente ermöglicht wird.

EP 0 977 274 A2 offenbart ein Solarstromsystem mit einer Mehrzahl von Photovoltaikmodulen, die jeweils in einem Halterahmenprofil gehalten sind. In den Halterahmenprofilen sind Hohlräume ausgebildet, in denen elektrische Kabel, die einer elektrischen Verschaltung benachbarter Photovoltaikmodule dienen, verdeckt und geschützt geführt sind. Die Halterahmen werden jedoch mit Hilfe von Befestigungsbolzen unmittelbar auf einem Hausdach oder einer Haltestruktur befestigt. Zur elektrischen Verschaltung benachbarter Photovoltaikmodule müssen jedoch die Verbindungsstecker von Hand zusammengesteckt werden.

EP 0 999 601 A1 offenbart Anschlusskästen zur Verbindung mit der Rückseite von Photovoltaikmodulen, um eine elektrische Verschaltung benachbarter Photovoltaikmodule zu ermöglichen. Die Anschlusskästen sind abgedichtet ausgebildet. Zur elektrischen Verschaltung benachbarter Photovoltaikmodule müssen elektrische Verbindungsstecker von Hand zusammengesteckt werden. Die mechanische Halterung der Photovoltaikmodule ist nicht offenbart.

US 5,571,338 offenbart die Montage von Photovoltaikmodulen an als Endlosprofilen ausgebildeten Montageträgern. Zur mechanischen Verbindung von zwei benachbarten Photovoltaikmodulen dienen U-förmige Halteklammern, die einerseits in die Montageträger eingreifen und an diesen gesichert sind und die andererseits formschlüssig in die Halterahmen der zu verbindenden Photovoltaikmodule eingreifen. Zur elektrischen Verschaltung von benachbarten Photovoltaikmodulen müssen elektrische Verbindungsstecker von Hand zusammengesteckt werden.

EP 0 500 066 A1 offenbart den allgemeinen Aufbau des Halterahmens eines Photovoltaikmoduls. Mehrere Photovoltaikmodule können unmittelbar aneinander angrenzend angeordnet werden, um ein Solarsystem auszubilden. Zur elektrischen Verschaltung von benachbarten Photovoltaikmodulen müssen elektrische Verbindungsstecker von Hand zusammengesteckt werden.

WO 01/75377 A1 offenbart ein Solarsystem, bei dem die einzelnen Photovoltaikmodule dachziegelartig überlappend angeordnet sind. Die Photovoltaikmodule sind jeweils in einem Halterahmen gefasst. Die Halterahmen können hakenartig in einen länglichen Montageträger eingehängt werden. Zur elektrischen Verschaltung von benachbarten Photovoltaikmodulen müssen elektrische Verbindungsstecker von Hand zusammengesteckt werden.

### Zusammenfassung der Erfindung

Aufgabe der vorliegenden Erfindung ist es, ein einfach zu konfigurierendes und zu montierendes Solarstromsystem mit mehreren Photovoltaikmodulen bereitzustellen, bei dem sich die Photovoltaikmodule mit relativ wenig Aufwand zuverlässig und/oder in gestalterisch vorteilhafter Weise elektrisch verschalten lassen.

Diese und weitere Aufgaben werden gemäß der vorliegenden Erfindung durch ein Solarstromsystem mit den Merkmalen nach Anspruch 1 gelöst. Weitere vorteilhafte Ausführungsformen sind Gegenstand der rückbezogenen Ansprüche.

Somit geht die vorliegende Erfindung aus von einem Solarstromsystem, das zumindest einen Montageträger und eine Mehrzahl von Photovoltaikmodulen umfasst, die auf den oder die Montageträger montiert sind und elektrisch miteinander in geeigneter Konfiguration verschaltet sind, und zwar in Anpassung sowohl an elektrische Erfordernisse als auch an die baulichen Gegebenheiten einer Dachabdeckung oder Fassade, auf die das Solarstromsystem montiert ist. Dabei kann der Montageträger rahmenartig ausgebildet sein, mit einer Mehrzahl von in einer Matrixanordnung vorgesehenen Feldern zur Aufnahme eines jeweiligen Photovoltaikmoduls. Gemäß einer weiteren Ausführungsform bilden parallel zueinander auf die Dachabdeckung oder Fassade montierte Profile den Montageträger aus. Ferner umfasst das Solarstromsystem eine Mehrzahl von Halteelementen zum Halten der Photovoltaikmodule an den Montageträgern sowie eine Mehrzahl von Verbindungselementen zum elektrischen Verschalten der Photovoltaikmodule.

Erfindungsgemäß sind die Photovoltaikmodule jeweils am Rand zumindest abschnittsweise von einem Halterahmen, der aus einem Kunststoff und bevorzugter aus einem elastomeren Kunststoff ausgebildet ist, eingefasst, wobei in den Halterahmen mechanische Verbindungsmittel sowie zumindest ein Verbindungsstecker integriert sind und die mechanischen Verbindungsmittel jeweils formschlüssig mit einem zugeordneten Halteelement zusammenwirken.

Der Formschluss sowie die Integration sowohl der mechanischen Verbindungsmittel als auch der Verbindungsstecker in den Kunststoff-Halterahmen ermöglicht erfindungsgemäß eine präzise und zuverlässige Befestigung und elektrische Verschaltung der Photovoltaikmodule. Der Halterahmen kann durch Spritzgießen oder formwerkzeuggestütztes Anspritzen erfindungsgemäß mit sehr geringen Toleranzen hergestellt werden. Somit können die Photovoltaikmodule erfindungsgemäß ohne größeren Aufwand an den Montageträgern ausgerichtet und befestigt werden.

Gemäß einer weiteren Ausführungsform sind die mechanischen Verbindungsmittel mit den Halteelementen lösbar verrastet oder verriegelt. Dadurch können erfindungsgemäß Haltekräfte noch präziser vorgegeben werden, die auch die Kontaktkraft zur Ausbildung der elektrischen Steckverbindung bestimmen. Dabei kann durch die Verrastung oder Verriegelung eine Mindestkraft vorgegeben werden, die ausreichend ist, um die elektrischen Steckverbindungen zur Verschaltung der Photovoltaikmodule zu bewerkstelligen. Ferner kann gemäß einer weiteren Ausführungsform durch geeignete Verrastung eine mechanische Vorspannung der Photovoltaikmodule gegen die zugeordneten Halteelemente bzw. Montageträger erzielt werden.

Gemäß einer weiteren Ausführungsform sind Bypass-Dioden in oder an dem jeweiligen Montageträger vorgesehen. Dadurch wird eine räumliche Trennung zu den Solarzellen erzielt, so dass eine Erwärmung der Bypass-Dioden nicht unmittelbar zu einer Erwärmung der Solarzellen und somit zu einer Verringerung des fotoelektrischen Wirkungsgrads führt. Das Solarstromsystem gemäß der vorliegenden Erfindung kann somit mit höherem Wirkungsgrad betrieben werden.

Eine Anordnung der Bypass-Dioden in dem Montageträger kann insbesondere dann einfach realisiert werden, wenn der Montageträger als Hohlprofil ausgebildet ist, dessen Hohlraum von der Außenseite her ohne weiteres zugänglich ist. Gemäß einer bevorzugten Ausführungsform sind die Bypass-Dioden jeweils unmittelbar an dem Montageträger vorgesehen. Zum Schutz vor Umwelteinflüssen und zum Erleichtern einer elektrischen Kontaktierung wird es dabei bevorzugt, die Bypass-Dioden in einem gesondertem, mit elektrischen Steckverbindern oder dergleichen versehenen Gehäuse unterzubringen, das jeweils unmittelbar an dem Montageträger angeordnet bzw. montiert ist.

Dieses Gehäuse ist gemäß einer ersten Ausführungsform gesondert zu den Halteelementen ausgebildet. Gemäß einer weiteren Ausführungsform kann ein solches Gehäuse jedoch auch gleichzeitig als Verbindungs- bzw. Halteelement dienen, das an einer vorbestimmten Stelle in Entsprechung zu der elektrischen Verschaltung der Photovoltaikmodule an einem Montageträger montiert ist, so dass die Photovoltaikmodule von den Verbindungselementen gehalten sind.

Besonders bevorzugt sind die Montageträger dabei so ausgelegt, dass die Verbindungselemente dabei an beliebigen Stellen an den zugeordneten Montageträgern befestigt werden können, insbesondere stufenlos verschiebbar sind. Gemäß einer weiteren Ausführungsform können die Verbindungselemente an vorbestimmten Stellen in dem zugeordneten Montageträger eingerastet werden. Zu diesem Zweck können an dem Montageträger in geeignetem Rastermaß, das auf die geometrischen Abmessungen der aufzunehmenden Photovoltaikmodule abgestimmt ist, Verrastungselemente vorgesehen sein, in welche die Verbindungselemente jeweils eingerastet werden können. Während der Montage müssen somit nur noch diese Verrastungsstellen gesucht werden. Die Verbindungselemente können somit praktisch nicht mehr unter falschen Abständen montiert werden, was die Geschwindigkeit und Zuverlässigkeit der Montage auch durch ungelernte Arbeitskräfte deutlich erhöht.

Gemäß einer weiteren Ausführungsform sind die Montageträger als Endlosprofile ausgebildet, beispielsweise mit einem quadratischen oder rechteckigförmigen Querschnitt. Dabei können die Endlosprofile mit zumindest einer in Längsrichtung verlaufenden Vertiefung bzw. Nut und/oder mit zumindest einem sich in Längsrichtung erstreckenden Vorsprung ausgebildet sein, in die korrespondierend ausgebildete Verrastungsmittel der Verbindungselemente eingreifen. Die Längsvertiefung bzw. -erhebung kann dabei mit einem geeigneten Profil zum sicheren Halten der Verbindungselemente ausgebildet sein, insbesondere als T-Nut.

Bei einer Matrixanordnung von Photovoltaikmodulen müssen wahlweise horizontal oder vertikal zueinander benachbarte Photovoltaikmodule miteinander verschaltet werden. Um eine solche Verschaltung zu gewährleisten, sind gemäß einer weiteren Ausführungsform die mechanischen Verbindungsmittel und/oder der bzw. die Verbindungsstecker auf einander gegenüberliegenden Längsseiten des rechteckförmigen oder quadratischen Photovoltaikmoduls an identischen Positionen so vorgesehen, dass die Photovoltaikmodule wahlweise in unterschiedlichen Drehstellungen auf die Montageträger montiert werden können, um eine geeignete elektrische Verschaltung der Photovoltaikmodule in Entsprechung zu deren jeweiliger Drehstellung zu ermöglichen.

Insbesondere können die mechanischen Verbindungsmittel und/oder der bzw. die Verbindungsstecker auf einander gegenüberliegenden Längsseiten des rechteckförmigen oder quadratischen Photovoltaikmoduls an identischen Positionen so vorgesehen sein, dass in einer ersten Drehstellung eine elektrische Verbindung zu einem horizontal benachbarten Photovoltaikmodul ausgebildet werden kann und in einer zweiten, unterschiedlichen Drehstellung, die bevorzugt um 180° relativ zu der ersten Drehstellung verdreht ist, eine elektrische Verbindung zu einem vertikal benachbarten Photovoltaikmodul ausgebildet werden kann.

Gemäß einer weiteren Ausführungsform kann in das Kunststoffmaterial des Halterahmens ferner ein Verankerungs- bzw. Rückhaltemittel integriert sein, um ein Abreißen der vorgenannten Verbindungs- und/oder Ausrichtmittel von bzw. aus dem Halterahmen zu verhindern, etwa im Falle eines Windsogs nach der Montage. Ein solches Verankerungsmittel kann insbesondere als in den Halterahmen integriertes Profil ausgebildet sein, das sich zumindest abschnittsweise in Umfangsrichtung des Halterahmens erstreckt und in das die Verbindungs- und/oder Ausrichtmittel eingreifen, um an dem Halterahmen zurückgehalten zu werden.

Gemäß einer weiteren Ausführungsform umfasst das Solarstromsystem weiterhin zumindest ein auch unabhängig beanspruchbares Wechselrichter-Modul, das im äußeren Erscheinungsbild identisch zu den Photovoltaikmodulen ausgebildet ist und an geeigneter Stelle in der Anordnung von Photovoltaikmodulen auf den Montageträger montiert ist.

Ein weiterer Gesichtspunkt der vorliegenden Erfindung betrifft ferner ein Verfahren zur Montage eines Solarstromssystems, wie ausführlicher beschrieben.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1: in einer perspektivischen Explosionsansicht einen Ausschnitt aus einem Solarstromsystem gemäß einer ersten Ausführungsform der vorliegenden Erfindung;
- Fig. 2a und 2b: in einer perspektivischen Darstellung ein Halteelement des Solarstromsystems gemäß der Fig. 1;
- Fig. 3a bis 3c: in einer Draufsicht, einer perspektivischen Draufsicht und einer Seitenansicht ein elektrisches Verbindungselement des Solarstromsystems gemäß der Fig. 1;
- Fig. 4a: bis 4d einen Eckbereich eines Halterahmens des Solarstromsystems gemäß der Fig. 1 in einer Ansicht von unten, in einer perspektivischen Draufsicht, in einer Seitenansicht und einer Schnittansicht;
- Fig. 5: in einer teilperspektivischen Explosionsansicht einen als Endlosprofil ausgebildeten Montageträger mit einem Verbindungselement gemäß einer zweiten Ausführungsform der vorliegenden Erfindung;
- Fig. 6: das System gemäß der Fig. 5 in einem montierten Zustand;
- Fig. 7: ein entsprechendes System gemäß einer Modifikation der zweiten Ausführungsform der vorliegenden Erfindung;
- Fig. 8: in einem schematischen Teilschnitt ein Photovoltaikmodul mit einem in den Halterahmen auf der Rückseite integrierten Anschlussstecker und einer korrespondierenden Verbindungsbuchse eines elektrischen Verbindungselements in einem Solarstromsystem gemäß der vorliegenden Erfindung;
- Fig. 9a: eine beispielhafte elektrische Stringverschaltung eines Wechselrichter-Moduls mit fünfzehn Photovoltaikmodulen auf einer quadratischen Grundfläche;
- Fig. 9b: in einer schematischen Draufsicht ein Photovoltaikmodul mit Anschlusssteckern gemäß der vorliegenden Erfindung;
- Fig. 9c: in einer Draufsicht ein Wechselrichter-Modul gemäß der vorliegenden Erfindung mit daran vorgesehenen Anschlusssteckern;
- Fig. 10: eine beispielhafte elektrische Stringverschaltung eines Wechselrichter-Moduls mit fünfzehn Photovoltaikmodulen auf einer quadratischen Grundfläche gemäß einer weiteren Ausführungsform der vorliegenden Erfindung, wobei zwei verschiedene alternativ realisierbare des Wechselrichter-Moduls überlagernd dargestellt sind;
- Fig. 11: in einer Draufsicht ein Wechselrichter-Modul bei der Ausführungsform gemäß der Fig. 10 mit daran vorgesehenen Anschlusssteckern;
- Fig. 12: in einem schematischen Querschnitt ein Wechselrichter-Modul gemäß der vorliegenden Erfindung;
- Fig. 13: in einer perspektivischen Explosionsdarstellung ein Photovoltaikmodul gemäß der vorliegenden Erfindung;
- Fig. 14: in einer schematischen Schnittansicht das Photovoltaikmodul gemäß der Fig. 13 mit einem mechanischen Ausricht- und Verbindungsmittel; und
- Fig. 15a - 15c: Einzelschritte eines Verfahrens zur Herstellung des Photovoltaikmoduls gemäß der vorliegenden Erfindung.

In den Figuren bezeichnen identische Bezugszeichen identische oder im Wesentlichen gleich wirkende Elemente oder Elementgruppen.

### Ausführliche Beschreibung von bevorzugten Ausführungsbeispielen

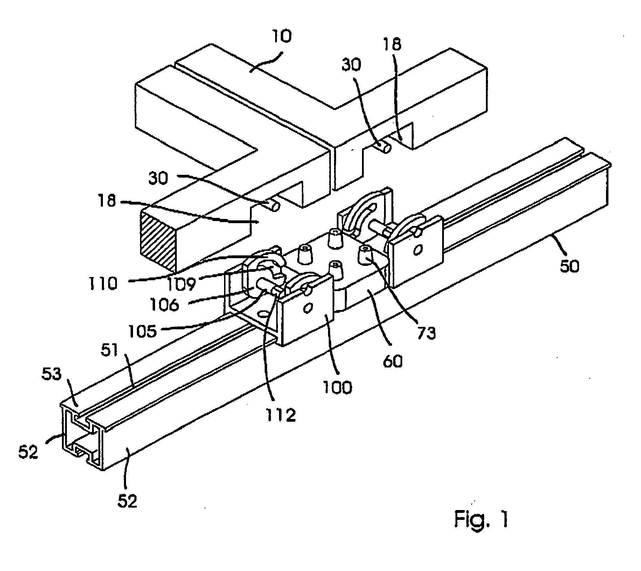

Die Fig. 1 zeigt in einer perspektivischen Explosionsansicht einen Ausschnitt aus einem Solarstromsystem gemäß einer ersten Ausführungsform der vorliegenden Erfindung. Dieses umfasst mehrere parallel und beabstandet zueinander oder rahmenartig angeordnete Montageträger 50, auf denen Halteelemente 100 und als elektrische Verbindungselemente wirkende Doppelbrücken 60 montiert sind. Jeweils vier Halteelemente 100 sichern ein Photovoltaikmodul durch formschlüssiges Verrasten bzw. Verriegeln von in den Eckbereichen des Halterahmens befindlichen Haltezapfen 30, wie nachfolgend beschrieben. Beim Verriegeln der Haltezapfen 30 werden gleichzeitig in Eckbereichen des Halterahmens auf der Unterseite desselben angeordnete Kontaktstecker bzw. Kontaktbuchsen mit den zugeordneten Kontaktbuchsen bzw. Kontaktsteckern 73 der Doppelbrücke 60 zusammengesteckt, wodurch eine elektrische Kontaktierung zur Verschaltung von zwei benachbarten Photovoltaikmodulen erzielt wird.

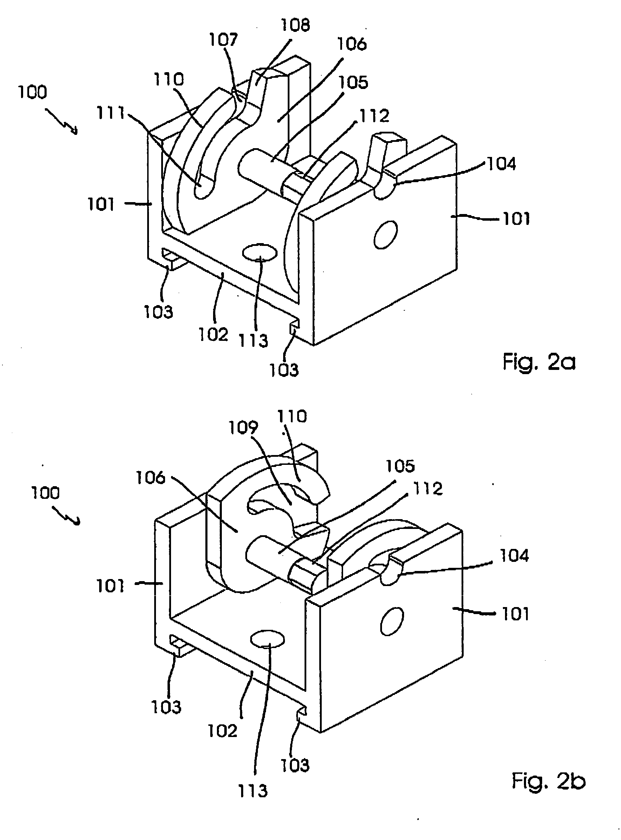

Gemäß der Fig. 1 ist der Montageträger 50 als Endlosprofil mit einem quadratischen Querschnitt ausgebildet, beispielsweise als Aluminium-Strangpressprofil. Auf den Längsseiten des Montageträgers 50 sind zwei T-Nuten 51 ausgebildet, in die korrespondierend ausgebildete Verrastungselemente eingreifen, wie nachfolgend beschrieben. Bei dem Ausführungsbeispiel gemäß der Fig. 1 ragen die oberen Profilschenkel 53 über die Seitenwände 52 des Endlosprofils 50 hinaus, die von Seitenwänden 101 (vgl. Fig. 2a) und Querstegen 103 der Halteelemente 100 umgriffen werden. Die Halteelemente 100 sind somit von den Montageträgern 50 längsverschieblich in der Art einer Führungsschiene geführt, wobei die Halteelemente 100 in einer Richtung senkrecht zur Längsrichtung der Montageträger 50 mit minimalem Spiel geführt sind und senkrecht nach oben mit einem minimalen oder durch den Abstand der Querstege 103 zu dem Boden 102 der Halteelemente 100 vorbestimmten Spiel geführt sind. Gemäß der Fig. 2a ist im Boden 102 eine Bohrung 113 ausgebildet, in die eine Senkkopfschraube oder ein vergleichbares Feststellelement mit einem korrespondierend zur T-Nut 51 des Montageträgers 50 ausgebildetem Profilelement, das in diese zur Sicherung der Längsposition des Halteelements 100 eingreift und das Halteelement 100 beim Festziehen der Senkkopfschraube klemmt.

Gemäß den Fig. 2a und 2b ist an einer an den Seitenwänden 101 des Halteelements 100 gelagerten Achse 105 eine von zwei Kurvenelementen 109 gebildete Klaue drehbeweglich gelagert. Diese kann mittels eines Federelements oder dergleichen in die in der Fig. 2b dargestellte Verriegelungsstellung vorgespannt sein. Gemäß der Fig. 2a ist in den Kurvenelementen 109 eine exzentrische umfängliche Nut 109 ausgebildet, die über eine Einführöffnung 107 mit einer Einführschräge 108 zum Führen des Haltezapfens 30 eines Photovoltaikmoduls nach außen hin geöffnet ist. Ferner sind in den Seitenwänden 101 des Halteelements 100 zwei halbkreisförmige Aussparungen 104 oberhalb der Drehachse 105 ausgebildet, in welchen zum Verriegeln eines Photovoltaikmoduls jeweils ein senkrecht von einer Seitenfläche des Halterahmens 10 abragender Haltezapfen 10 aufgenommen ist. In der Drehstellung der Klaue gemäß der Fig. 2a befindet sich der Haltezapfen in der Einführöffnung 107 der exzentrischen Nut 109. Die Einführschräge 108 führt dabei den Haltezapfen 30 zuverlässig in die halbkreisförmige Aussparung 104. Durch den Verlauf der exzentrischen Nut 109 kann ggf. eine mechanische Vorspannung des Photovoltaikmoduls gegen das Halteelement 100 realisiert werden.

Gemäß der Fig. 1 verbleibt zwischen zwei benachbarten Photovoltaikmodulen ein Spalt und ist die Länge der Drehachse 105 um diese Spaltbreite größer als die doppelte Breite des Halterahmens 10, sodass der auf dem Außenumfang der Drehachse 105 ausgebildete Außensechskant 112 mit einem Werkzeug, beispielsweise einem Schraubschlüssel, das in den Spalt eingreift, betätigt werden kann, um die Drehachse 105 in die in der Fig. 2b gezeigte Drehstellung zu drehen. Dabei wird der Haltezapfen 30 bzw. werden die Haltezapfen 30 von zwei benachbarten Photovoltaikmodulen in der exzentrischen Nut 109 aufgenommen und schließlich in einer von einer Aussparung 104 und dem Boden 111 der Nut 109 gebildeten Aufnahme eng anliegend aufgenommen. Dadurch wird die Lage der Photovoltaikmodule in Längsrichtung der Montageträger 50 sowie in Richtungen senkrecht dazu gesichert. Eine solche Ausbildung der Aufnahme ist jedoch selbstverständlich nicht zwingend erforderlich.

Gemäß der Fig. 1 sind die Haltezapfen 30 in rechteckförmigen Aussparungen 18 in Eckbereichen der Halterahmen 10 angeordnet und ragen nicht über die Seitenfläche der Halterahmen 10 hinaus. Beim Verriegeln des Haltezapfens 30 in dem Halteelement 100 wird dabei der von der drehbeweglichen Klaue ausgebildete Verriegelungsmechanismus in der Aussparung 30 aufgenommen. In der verriegelten Stellung werden die Halterahmen 10 von einer von den Seitenwänden 101 und dem Boden 102 der Halteelemente 100 ausgebildeten Aufnahme eng anliegend aufgenommen, was zur Erhöhung der Verwindungssteifigkeit beiträgt.

Wie dem Fachmann ohne weiteres ersichtlich sein wird, sind die Halteelemente 100 zweckmäßig aus einem Kunststoff spritzgegossen bzw. abgeformt oder aus einem Metallwerkstoff gefertigt.

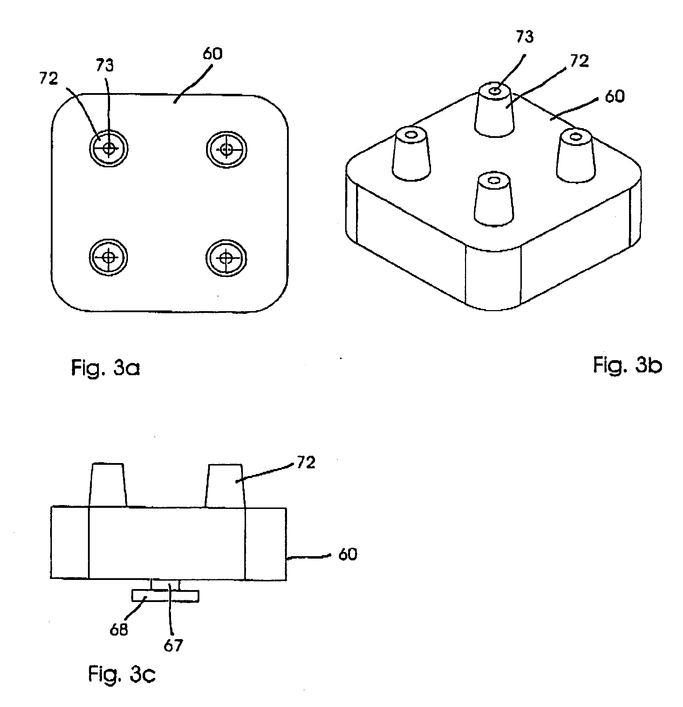

Die Fig. 3a bis 3c zeigen die Doppelbrücke 60 zur elektrischen Verschaltung der Photovoltaikmodule. Auf der Oberseite der Doppelbrücke 60 sind vier Steckerbuchsen 73 in einer quadratischen Anordnung angeordnet. Auf der Unterseite der Doppelbrücke ist ein von einem Vorsprung 67 und einem Quersteg 68 gebildetes Profilelement ausgebildet, das korrespondierend zum Profil der T-Nut 51 (vgl. Fig. 1) der Montageträger 50 ausgebildet ist und in diese eingreift. Die Längsposition der zwischen zwei Halteelementen 100 befindlichen Doppelbrücke an dem Montageträger 50 wird beim Sichern der Halteelemente 100 automatisch festgelegt. Gemäß einer weiteren Ausführungsform kann die Doppelbrücke einstückig mit den Halteelementen 100 ausgebildet oder mit zumindest einem Halteelement 100 verbunden sein.

Je nachdem, ob zwei vertikal oder horizontal zueinander benachbarten Photovoltaikmodule miteinander verschaltet werden sollen, sind zwei einander in der vertikalen oder horizontalen Richtung gegenüberliegende Kontaktbuchsen 73 der Doppelbrücke in der bekannten Weise miteinander verschaltet. In der Doppelbrücke 60 kann zumindest eine Bypass-Diode vorgesehen sein, die in Sperrrichtung betrieben wird, wenn das zugeordnete Photovoltaikmodul beleuchtet ist. Wie dem Fachmann ohne weiteres ersichtlich sein wird, ist das Gehäuse der Doppelbrücke zweckmäßig aus einem Kunststoff spritzgegossen.

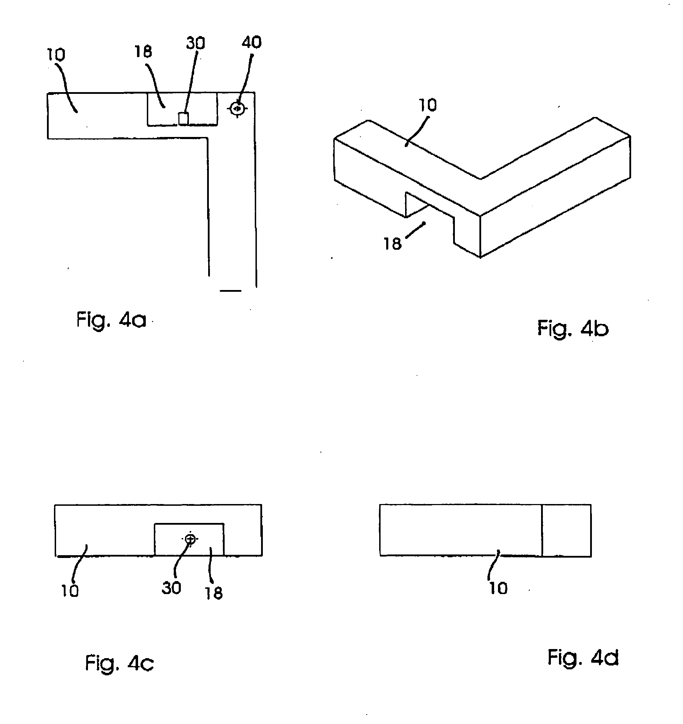

Die Fig. 4a bis 4d zeigen einen Eckbereich eines Halterahmens 10 eines Photovoltaikmoduls in verschiedenen Ansichten. Gemäß der Fig. 4a ist in den Halterahmen 10 ein senkrecht stehender Kontaktstecker 40 integriert, wie nachfolgend ausführlicher beschrieben. Angrenzend an den Kontaktstecker 40 ist die Aussparung 30 mit dem darin vorgesehenen Haltezapfen 30 angeordnet. Der Abstand zwischen dem Kontaktstecker 40 und dem Haltezapfen 30 wird dabei durch den Abstand zwischen der halbkreisförmigen Aussparung 104 (vgl. Fig. 1) und der zugeordneten Steckerbuchse 73 auf der Oberseite der Doppelbrücke 60 vorgegeben, wenn diese unmittelbar an dem Halteelement 100 anliegt.

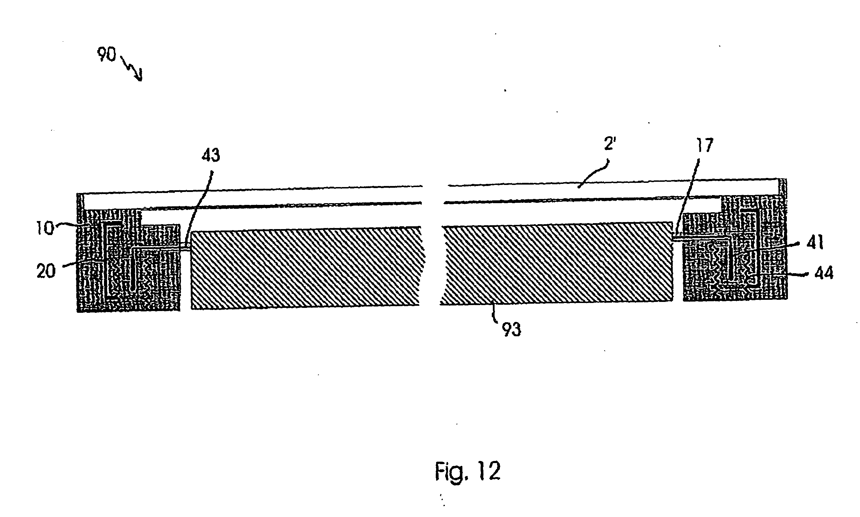

Zur Montage des Solarstromsystems wird gemäß der Fig. 1 wie folgt vorgegangen: Zunächst werden die Montageträger unter vorgegebenen Abständen, die auf die Abmessungen der Photovoltaikmodule abgestimmt sind, auf der Dach- oder Fassadenkonstruktion befestigt. Anschließend werden die Halteelemente 100 und Doppelbrücken 60 in die Montageträger 50 eingesteckt und in Position gebracht. Anschließend werden die Photovoltaikmodule, ggf. zusätzlich eines oder mehrere Wechselrichtermodule, wie nachfolgend anhand der Fig. 12 beschrieben, in der vorstehend beschriebenen Weise auf die Halteelemente 100 und die Doppelbrücken 60 aufgesetzt. In dieser Stellung können die Halteelemente 100 noch frei an den Montageträgern 50 verschiebbar sein. Gemäß einer alternativen Ausführungsform können die Halteelemente 100 in dieser Phase jedoch bereits fest an den Montageträgern 50 befestigt sein. Anschließend wird die Lage der Photovoltaikmodule auf der Dach- oder Fassadenkonstruktion nochmals geprüft und ggf. durch Verschieben entlang den Montageträgern 50 korrigiert. Anschließend werden die Klauen 109 der Halteelemente 100 mit einem Werkzeug, das in den Spalt zwischen zwei benachbarten Photovoltaikmodulen eingreift, verdreht, wodurch die Photovoltaikmodule fest mit den Halteelementen 100 verbunden werden. Anschließend wird die Position der Halteelemente 100 an den Montageträgern 50 gesichert, beispielsweise durch Festziehen der vorgenannten Senkkopfschrauben. Beim Verriegeln bzw. Verrasten der Photovoltaikmodule an den Halteelementen 100 werden die Module mit einer durch den Verriegelungsmechanismus vorbestimmten Kraft gegen die Doppelbrücken gedrückt, sodass die Verbindungsstecker mit einer vorbestimmten Kontaktkraft zusammengesteckt werden.

Wie dem Fachmann ohne weiteres ersichtlich sein wird, können die Halteelemente 100 jederzeit wieder entriegelt werden, um die Photovoltaikmodule wieder freizugeben, oder an den Montageträgern gelöst werden, um die Position der Halteelemente 100 und Photovoltaikmodule zu korrigieren. Um eine Einleitung von Spannungen in die Photovoltaikmodule zu verringern oder zu verhindern, beispielsweise hervorgerufen durch Winddruck oder Windsog, Schneelasten, thermische Spannungen oder dergleichen, kann an den Halteelementen für einen elastischen Ausgleich gesorgt werden. Beispielsweise können die Drehachsen 109 an den Seitenwänden 101 elastisch gelagert sein, können die Drehachsen 109 und/oder die Seitenwände 101 aus einem elastischen Material ausgebildet sein, können die Klauen 109 aus einem elastischen Material ausgebildet sein, können die Haltezapfen 30 in den Halterahmen aus einem elastischen Material ausgebildet sein oder an diesen elastisch gelagert sein oder kann auf der Unterseite der Halteelemente 100 eine dauerelastische Einlage vorgesehen sein.

Wie dem Fachmann ohne weiteres ersichtlich sein wird, können zur Erzielung eines Formschlusses zur Befestigung der Photovoltaikmodule an den Montageträgern an den Halterahmen der Photovoltaikmodule auch andere Elemente vorgesehen sein, die in der bekannten Weise mit darauf abgestimmten Verriegelungs- oder Verrastungsmechanismen der Halteelemente zusammenwirken.

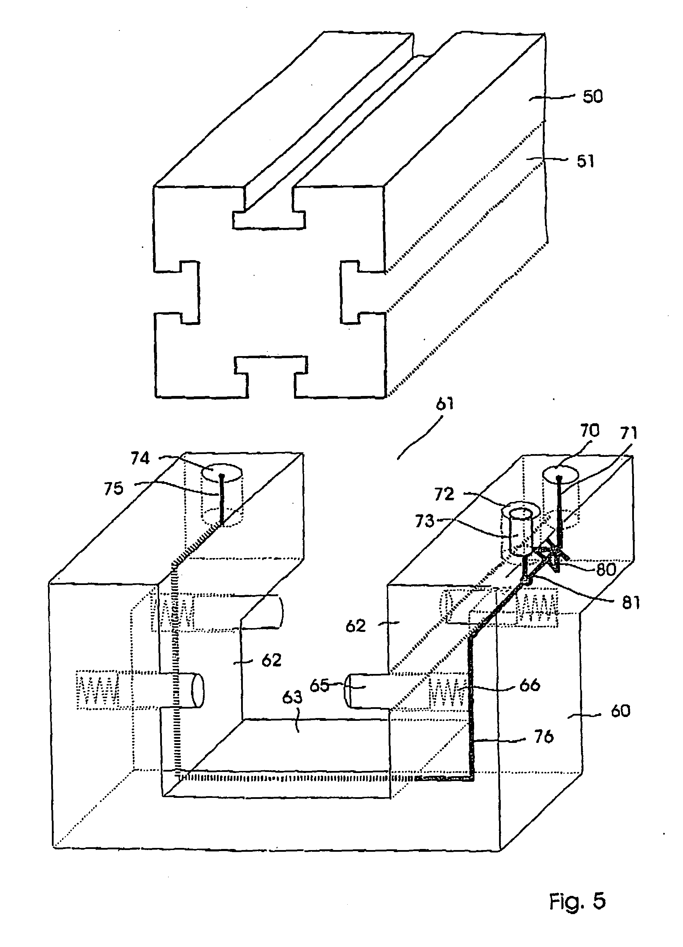

Die Fig. 5 zeigt einen als Endlosprofil ausgebildeten Montageträger mit einem Verbindungselement gemäß einer zweiten Ausführungsform der vorliegenden Erfindung, bei der der als Endlosprofil ausgebildete Montageträger 50 von einem im Querschnitt U-förmigen Verbindungselement 60 klammerartig umgriffen ist.

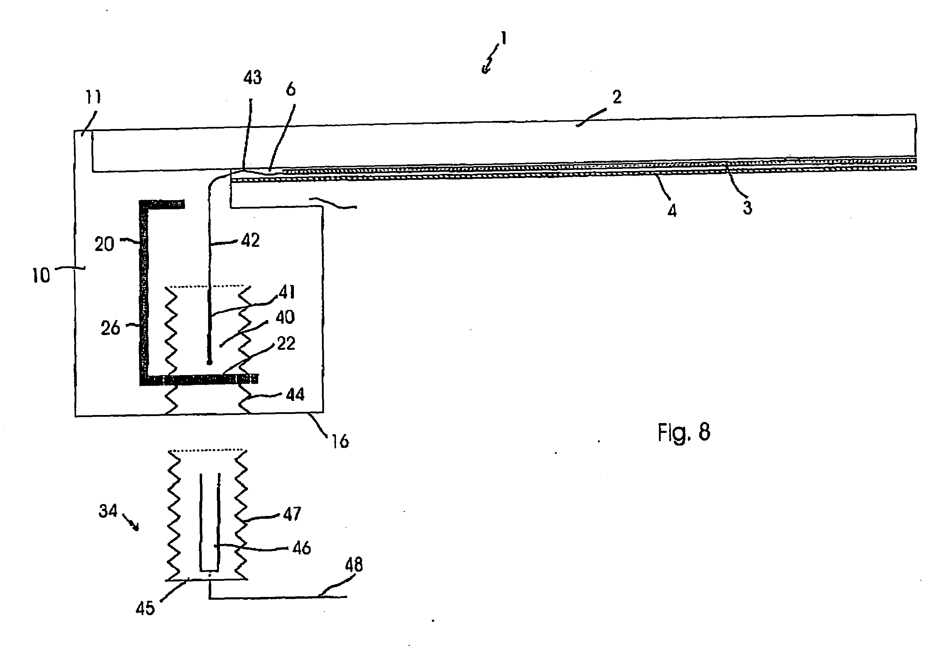

Die Photovoltaikmodule, die schematisch in der Fig. 8 gezeigt, werden auf die Verbindungselemente aufgesetzt, so dass die an der Unterseite des Halterrahmens 10 (vgl. Fig. 4) vorgesehenen Anschlussstecker 40 und/oder Steckerbuchsen in auf der Oberseite der Verbindungselemente 60 (vgl. Fig. 5) vorgesehene und korrespondierend ausgebildete Steckerbuchsen und/oder Anschlussstecker eingreifen. Dadurch wird eine elektrische Kontaktierung des aufgesteckten Photovoltaikmoduls erreicht. Durch die Verbindungsleitung 76 in dem Verbindungselement 60 wird dabei gleichzeitig eine elektrische Verbindung mit dem auf der gegenüber liegenden Seite des Montageträgers 50 aufgesteckten Photovoltaikmodul erreicht. Quer zum Montageträger einander gegenüber liegende Photovoltaikmodule können so in Reihe geschaltet werden, wobei dem gemäß der Fig. 5 auf der rechten Seite angeordneten Photovoltaikmodul eine Bypass-Diode 80 zugeordnet ist, die in Sperrrichtung betrieben wird, wenn das in der Fig. 5 auf der rechten Seite befindliche Photovoltaikmodul beleuchtet ist, und die dieses Photovoltaikmodul im Verschattungsfall überbrückt.

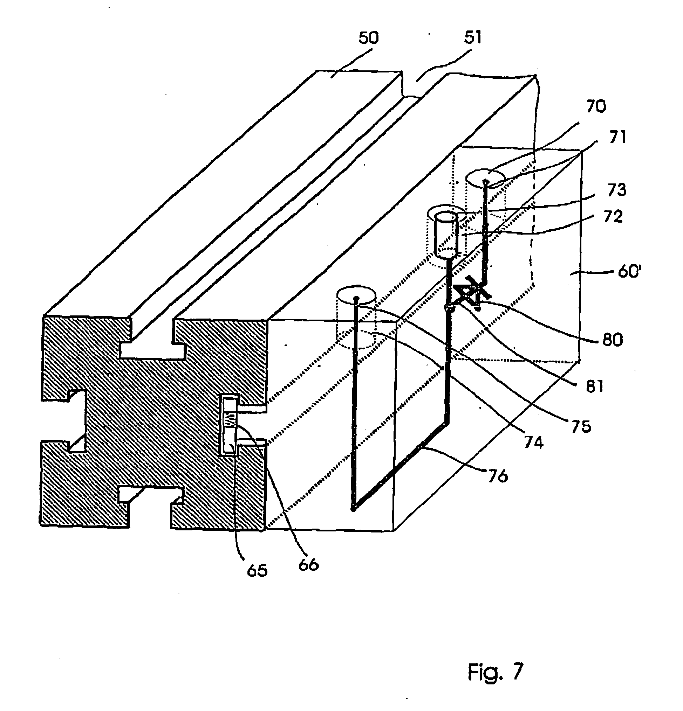

Um in Längsrichtung der Montageträger benachbarte Photovoltaikmodule miteinander so zu verbinden, dass ein zugeordnetes Photovoltaikmodul im Verschattungsfall überbrückt wird, ist gemäß der Fig. 7 ein weiterer Typ von Verbindungselement 60' vorgesehen. Bei diesem befinden sich der Anschlussstecker 74 und der Anschlussstecker 70 mit der zugeordneten Steckerbuchse 72 auf derselben Seite des Montageträgers 50 und innerhalb desselben Verbindungselements 60'. Anschlussstecker 70 und Steckerbuchse 72 sind über eine Bypass-Diode miteinander verschaltet und zur Aufnahme einer korrespondierend ausgebildeten Buchse und eines korrespondierend ausgebildeten Steckers eines ersten Photovoltaikmoduls bestimmt. Die Verbindung mit dem in Längsrichtung des Montageträgers 50 benachbarten Photovoltaikmodul erfolgt über die Verbindungsleitung 76 und den Anschlussstecker 74.

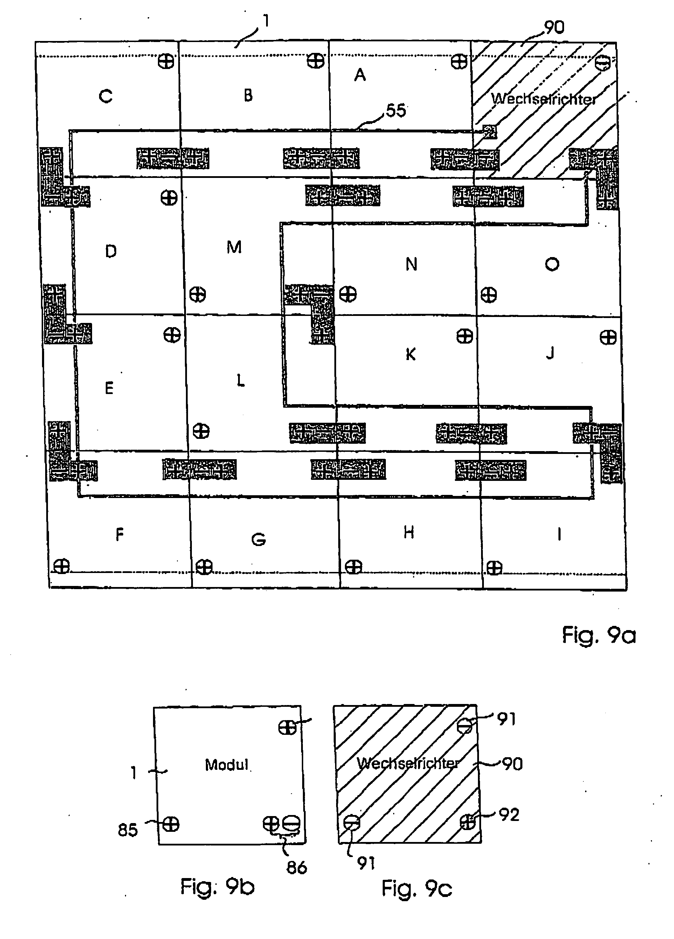

Durch geeignete geometrische Anordnung der beiden Typen von Verbindungselementen an den Montageträgern lässt sich so eine geeignete elektrische Verschaltung einer Mehrzahl von Photovoltaikmodulen erreichen, wie beispielhaft in der Fig. 9a dargestellt. Gemäß der Fig. 9a sind die mit den Buchstaben A bis O bezeichneten Photovoltaikmodule 1 in alphabetischer Reihenfolge hintereinander geschaltet. Insgesamt umfasst das Solarstromsystem fünfzehn Photovoltaikmodule 1 sowie ein Wechselrichter-Modul 90, das äußerlich im Wesentlichen identisch zu den Photovoltaikmodulen 1 ausgestaltet ist, insbesondere eine identische oder auf die benachbarten Photovoltaikmodule abgestimmte Oberflächenfarbe und -gestaltung aufweist.

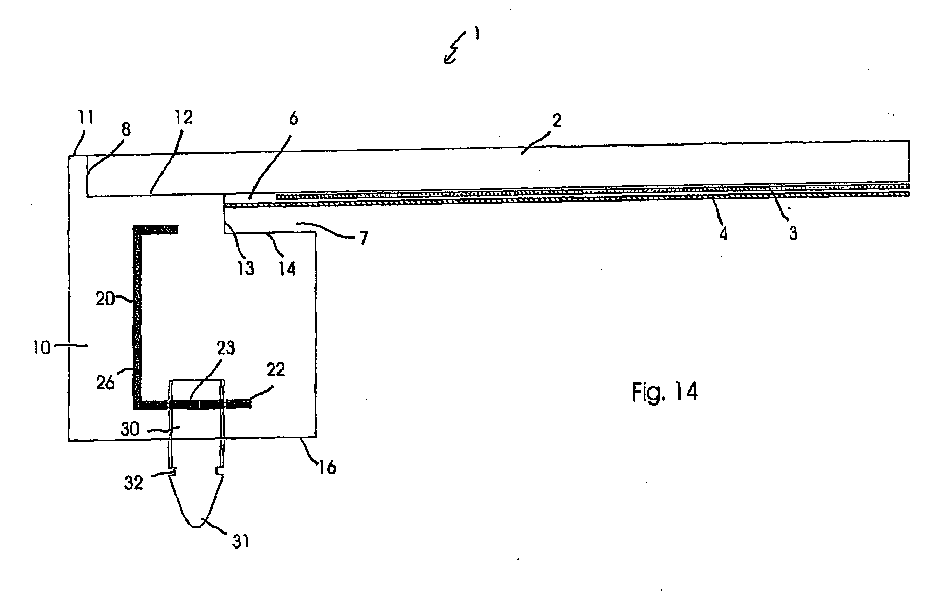

Ein solches Wechselrichter-Modul 90 ist beispielhaft in der Fig. 12 in einer Schnittansicht gezeigt. Dieses Wechselrichter-Modul 90 weist einen mechanischen Aufbau vergleichbar zu dem in der Fig. 8 und 14 gezeigten und nachfolgend noch ausführlicher beschriebenen Photovoltaikmodul auf. Anstelle der Solarzellen ist auf der Rückseite der Abdeckscheibe 2' der eigentliche Wechselrichter 93 angeordnet, bevorzugt in ein Gehäuse oder ein Kunststoff eingekapselt. Der Rest der Rückseite der Abdeckscheibe 2' kann, wie in der Fig. 12 gezeigt, mit einem Kunststoff 17 umspritzt sein, der insbesondere einstückig mit dem Halterahmen 10 ausgebildet sein kann. Die Kontaktierung des Wechselrichters 93 erfolgt rückseitig über die Anschlussfahne 43 und den Kontaktstift 41, in der Weise, wie im Zusammenhang mit dem Photovoltaikmodul gemäß der Fig. 8 noch ausführlicher zu beschreiben sein wird.

Die elektrische Kontaktierung des Photovoltaikmoduls 1 ist in der Fig. 9b gezeigt, derzufolge ein Plus-Anschluss 85 in der rechten oberen Ecke des Moduls, ein Plus-Anschluss und ein Minus-Anschluss in der rechten unteren Ecke des Moduls und ein Plus-Anschluss 85 in der linken unteren Ecke des Moduls vorgesehen ist. Die Stecker sind dabei auf der Unterseite des Halterahmens des Moduls ausgebildet, wie beispielhaft in der Fig. 8 dargestellt. Die Anordnung der Steckverbinder ist dabei nicht spiegelsymmetrisch relativ zur Mitte des Moduls 1. Dies ermöglicht im Zusammenwirken mit Halteelementen und entsprechenden Doppelbrücken, wie vorstehend im Zusammenhang mit der ersten Ausführungsform beschrieben, oder mit einem entsprechenden ersten oder zweiten Typ von Verbindungselement, wie vorstehend im Zusammenhang mit der zweiten Ausführungsform beschrieben, in einer ersten Drehstellung des Moduls 1 eine Verschaltung mit einem in der Fig. 9a horizontal benachbarten Photovoltaikmodul und in einer zweiten Drehstellung, nämlich um 180° verdreht, mit einem in der Fig. 9a vertikal benachbarten Photovoltaikmodul. Die beiden Drehstellungen können nicht miteinander verwechselt werden, da die Photovoltaikmodule 1 und das Wechselrichter-Modul 90 bevorzugt eine rechteckförmige Grundform aufweisen und da Anschlüsse von identischer Polarität nicht an identischen Positionen entlang von Längsseiten des Halterahmens angeordnet sind.

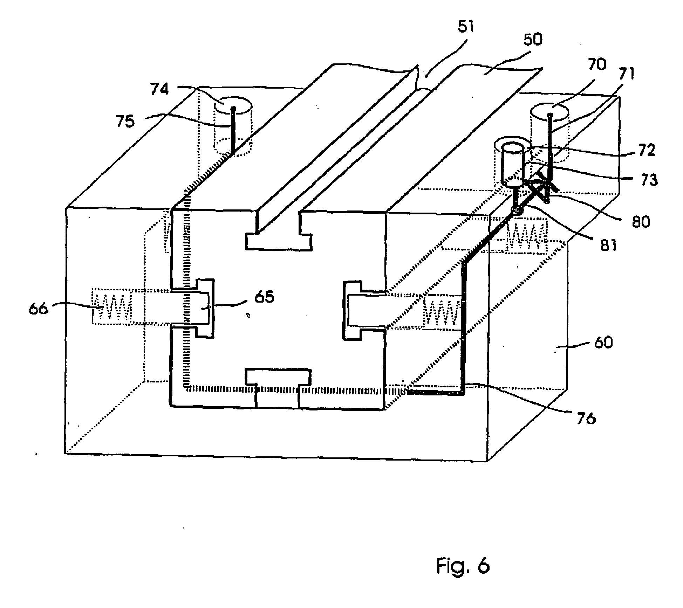

Gemäß der Fig. 9a ist stets der Plus-Anschluss eines Photovoltaikmoduls mit einem Minus-Anschluss eines benachbarten Photovoltaikmoduls verbunden, und zwar über ein Verbindungselement, wie in der Fig. 6 oder Fig. 7 gezeigt, wobei jedem Photovoltaikmodul eine Bypass-Diode zum Schutz zugeordnet ist, die gemäß der zweiten Ausführungsform bevorzugt in das Verbindungselement integriert ist.

Da zum Anschluss des Wechselrichter-Moduls 90 identische Verbindungselemente verwendet werden, weist auch das in der Fig. 9c gezeigte Wechselrichter-Modul 90 Steckverbinder 91, 92 an entsprechenden Stellen auf, allerdings ist eine Bypass-Diode nicht erforderlich.

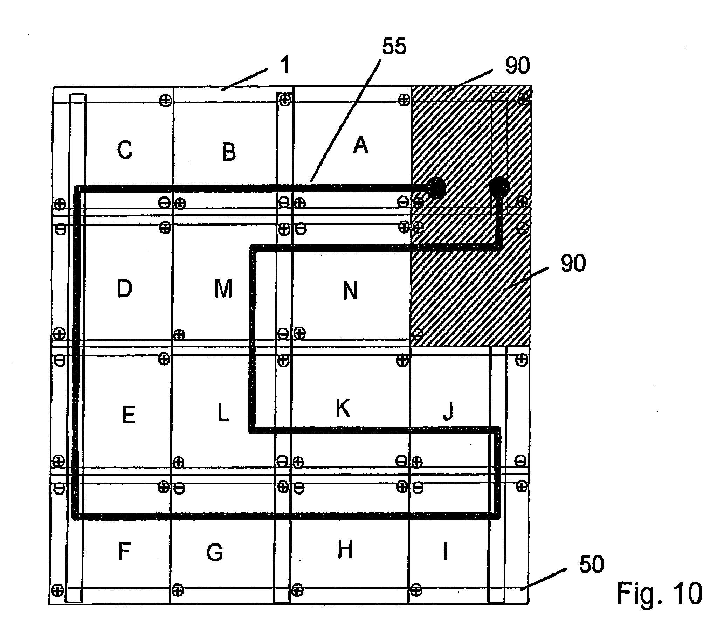

Die Fig. 10 zeigt eine elektrische Stringverschaltung von einem Wechselrichter-Modul mit fünfzehn Photovoltaikmodulen auf einer quadratischen Grundfläche gemäß einer weiteren Ausführungsform der vorliegenden Erfindung. Das zusätzlich dargestellte zweite Wechselrichter-Modul soll die optional wählbare Lage des Wechselrichter-Moduls kennzeichnen, in welchem Fall das erste Wechselrichter-Modul durch ein PhotovoltaikModul ersetzt wäre.

Gemäß der Fig. 10 sind in der rechten oberen und linken unteren Ecke des Photovoltaikmoduls 1 jeweils ein Plus-Anschlüsse vorgesehen und ist in der rechten unteren Ecke des Moduls Minus-Anschluss 85 vorgesehen ist. Die Stecker sind dabei auf der Unterseite des Halterahmens des Moduls ausgebildet, wie beispielhaft in der Fig. 8 dargestellt. Die Anordnung der Steckverbinder ist dabei nicht spiegelsymmetrisch relativ zur Mitte des Moduls 1. Dies ermöglicht im Zusammenwirken mit Halteelementen und entsprechenden Doppelbrücken, wie vorstehend im Zusammenhang mit der ersten Ausführungsform beschrieben, oder mit einem entsprechenden ersten oder zweiten Typ von Verbindungselement, wie vorstehend im Zusammenhang mit der zweiten Ausführungsform beschrieben, in einer ersten Drehstellung des Moduls 1 eine Verschaltung mit einem in der Fig. 10 horizontal benachbarten Photovoltaikmodul und in einer zweiten Drehstellung, nämlich um 180° verdreht, mit einem in der Fig. 10 vertikal benachbarten Photovoltaikmodul.

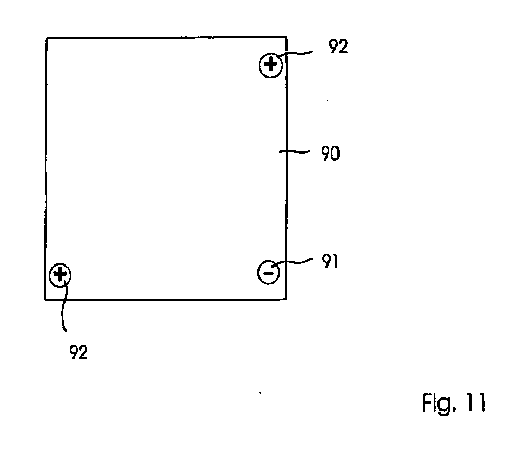

Die Fig. 11 zeigt ein für die Verschaltung gemäß der Fig. 10 ausgelegtes Wechselrichtermodul 90 mit einem Aufbau, wie vorstehend anhand der Fig. 12 beschrieben.

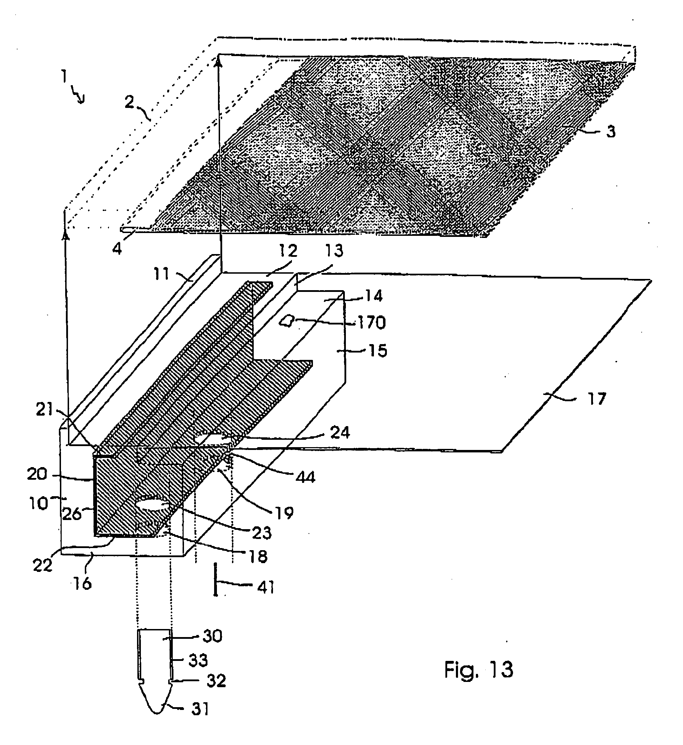

Die Fig. 13 und 14 zeigen in einer perspektivischen Explosionsdarstellung sowie in einem schematischen Teilschnitt ein Photovoltaikmodul für ein Solarstromsystem gemäß der vorliegenden Erfindung.

Gemäß der Fig. 13 umfasst das insgesamt mit dem Bezugszeichen 1 bezeichnete Photovoltaikmodul einen im Profil im Wesentlichen quaderförmigen Halterahmen 10, der ein flächiges Verbundmaterial trägt, das eine transparente Abdeckscheibe 2, beispielsweise aus einem Glas oder transparenten Kunststoff, und zumindest eine Solarzelle 3, bevorzugt eine Mehrzahl von Solarzellen, umfasst, wobei zwischen der Abdeckscheibe 2 und der Solarzellen-Anordnung eine transparente Kunststoffschicht, beispielsweise aus EVA, vorgesehen ist, in die die Solarzellen 3 eingebettet sind. Die Rückseite der Solarzellen 3 kann mit einer witterungsfesten Kunststoffverbundfolie, beispielsweise aus Polyvinylfluorid und Polyester, kaschiert sein. Alternativ können die Solarzellen in einen Kunstharz eingegossen und mit der transparenten Abdeckscheibe 2 verbunden sein. Die Solarzellen 3 erstrecken sich nicht ganz bis zum Rand der transparenten Abdeckscheibe 2.

Der Halterahmen 10 aus einem Kunststoff, beispielsweise Polyurethan, ist an den Rand des vorgenannten Verbundmaterials angespritzt oder angeschäumt oder angegossen und umfasst einen vergleichsweise schmalen oberen Umfangsrand 11, der die Abdeckscheibe 2 am Rand zumindest abschnittsweise einfasst, optional umlaufend dicht einfasst, eine horizontale Abstützfläche 12, deren Breite auf den Abstand des Seitenrands des Einkapselungsmaterials 4 zu dem Seitenrand der transparenten Abdeckscheibe 2 abgestimmt ist, eine Stufe 13, der sich ein Innenvorsprung 14 anschließt, der sich horizontal zur Innenseite des Photovoltaikmoduls erstreckt, sowie einen Innenrand 15 und eine Unterseite 16, die parallel zu der Abstützfläche 12 und dem Innenvorsprung 14 ist. Zwischen der Rückseite des vorgenannten Verbundmaterials und der Oberseite des Innenvorsprungs 14 verbleibt ein Spalt, dessen Breite durch die Höhe der Stufe 13 vorgegeben ist und bei einem bevorzugten Ausführungsbeispiel etwa 5,0 mm beträgt. Die Höhe des Innenrands 15 beträgt dabei bei einem bevorzugten Ausführungsbeispiel etwa 30 mm. Insgesamt fasst der Halterahmen 10 den Materialverbund am Rand ein. Gemäß der Fig. 13 ist auf die Rückseite des Materialverbunds eine Kunststofflage 17 geschäumt bzw. gespritzt, die bevorzugt aus demselben Material wie dem Material des Halterahmens 10 ausgebildet ist, also zweckmäßig aus einem elastomeren Kunststoff. Insgesamt ist die Anordnung von Solarzellen 3 hermetisch dicht eingekapselt in dem Halterahmen 10 gehalten.

Gemäß einer bevorzugten Ausführungsform (nicht gezeigt) schließt der obere Rand des Halterahmens 10 bündig mit der transparenten Abdeckscheibe 2 des Photovoltaikmoduls ab, was dem Photovoltaikmodul ein ansprechenderes Aussehen verschafft und zu einem vergleichsweise geringen Schmutzbefall und/oder Mossbefall führt.

Gemäß der Fig. 13 ist in den Haltrahmen 10 ein als Verankerungsmittel wirkendes C-förmiges Profil 20 integriert, das einen als Basisfläche wirkenden unteren Schenkel 22, einen vertikalen Verbindungsschenkel 26 und einen vergleichsweise kurzen oberen Schenkel 21 umfasst, wobei das Profil 20 zur Innenseite des Photovoltaikmodul 1 hin offen ist. Das Profil 20 erstreckt sich jeweils entlang der Längsseiten des Photovoltaikmoduls 1. Zweckmäßig sind in den Ecken des Photovoltaikmoduls 1 aneinander anstoßenden Profile 20 schräg geschnitten, so dass zwei benachbarte Profile 20 unmittelbar aneinander angrenzen können. Grundsätzlich können die Profile 20 jedoch auch Durchbrechungen aufweisen, auch in den Eckbereichen des Photovoltaikmoduls.

Gemäß der Fig. 13 sind in dem unteren Schenkel 22 an vorbestimmten Stellen Öffnungen 23, 24 ausgebildet. Wie der Zusammenschau der Figuren 13 und 14 entnommen werden kann, durchragt der Schaft eines Verbindungsstifts 30 die Öffnung 23, greift also der Verbindungsstift 30 in das Profil 20 ein. Der Verbindungsstift 30 kann beim Spritzgießen bzw. beim Schäumen des Halterahmens 10 in selbigen integriert werden. Alternativ kann der Verbindungsstift 30 nachträglich mit dem Halterahmen 10 verbunden werden, beispielsweise durch Einschrauben eines Außengewindes in den Kunststoff des Halterahmens 10 und/oder in das Profil 20. Gemäß der Fig. 13 ist das vordere Ende des Verbindungsstifts 30 mit einer konischen Spitze 31 versehen, wobei im Übergangsbereich zum Schaft eine umfängliche Rastausnehmung 32 zum Verrasten des Verbindungsstifts mit einer korrespondierend ausgebildeten Rastaufnahme eines Montagerahmens (nicht gezeigt) ausgebildet ist.

Wie dem Fachmann ohne weiteres ersichtlich sein wird, kann der Verbindungsstift 30 auch von einer Seitenfläche des Halterahmens 10 abragen und in einer in dem Halterahmen 10 ausgebildeten Aussparung angeordnet sein, wie vorstehend anhand der Fig. 1 und 4 beschrieben.

Wie dem Fachmann ohne weiteres ersichtlich sein wird, kann das vorgenannte Verankerungsmittel auch als geschlossenes Hohlprofil ausgebildet sein, das in dem Halterahmen als Verdrängungskörper wirkt und so zu einer weiteren Einsparung von Kunststoffmaterial führt. Ein solches Hohlprofil kann außerdem die Steifigkeit des Halterahmens insgesamt verbessern.

Wie den Figuren 13 und 8 entnommen werden kann, ist im Bereich der Öffnung 24 in dem Halterahmen 10 ein zylindrischer Hohlraum 40 ausgebildet, in dessen Innenraum mittig ein Kontaktstift 41 eines üblichen elektrischen Steckverbinders angeordnet ist. Der Kontaktstift 41 ist dabei in das Kunststoffmaterial des Halterahmens 10 eingegossen bzw. geschäumt oder eingegossen. Der Kontaktstift 41 ist mit einem Draht 42 verbunden, der sich vertikal aufwärts erstreckt und dabei den oberen Schenkel 21 des Profils 20 passiert. Nahe der Rückseite der Abdeckscheibe 2 ist der Draht 42 abgewinkelt. Der Draht 42 geht über bzw. ist verbunden mit einer Anschlussfahne 43, die in den Seitenrand des Verbundmaterials eindringt, insbesondere in das rückseitig aufgebrachte Einkapselungsmaterial 4 eindringt, um seitlich eine Solarzelle 3 geeignet zu kontaktieren. Das Profil 20 kann auch aus einem Metall ausgebildet sein, beispielsweise als übliches Strangpressprofil.

Gemäß der Fig. 8 ist in der Umfangswand des Hohlraums 40 eine Riffelung 44 oder ein vergleichbares Formschlussgebilde ausgebildet, das beim Eingriff des vorstehend beschriebenen Steckers in eine korrespondierend ausgebildete Steckerbuchse mit einem korrespondierend ausgebildeten Formschlussgebilde, beispielsweise einer komplementären Riffelung 47, der komplementären Steckerbuchse zusammenwirkt, um die elektrische Steckverbindung abzudichten. Der Montagerahmen ist in der Fig. 8 schematisch mit dem Bezugszeichen 34 bezeichnet und umfasst eine Mehrzahl von Montageträgern, wie vorstehend beschrieben.

Wie in der Fig. 8 schematisch angedeutet, umfasst eine Steckerbuchse in dem Montagerahmen 34 eine Steckerstiftaufnahme 46, die mittig in einer Buchse 45 angeordnet ist, wobei die Aufnahme 46 mit einem elektrischen Verbindungselement, beispielsweise einem elektrischen Verbindungskabel, verbunden ist. Das Verbindungselement 48 ist mit einer angrenzenden Steckerbuchse verbunden, mit der ein benachbartes Photovoltaikmodul oder ein benachbarter Wechselrichter beim Einstecken in den Montagerahmen eine elektrische Verbindung eingeht. Somit wird über den Montagerahmen eine geeignete Verschaltung einer Mehrzahl von Photovoltaikmodulen und ggf. mindestens eines Wechselrichters bewerkstelligt. Gemäß einer besonders bevorzugten Ausführungsform sind die vorstehend beschriebenen mechanischen Verbindungsmittel und die vorstehend beschriebenen elektrischen Verbindungsmittel auf einander gegenüberliegenden Längsseiten eines Photovoltaikmoduls an identischen Positionen vorgesehen. Dabei kann das Photovoltaikmodul eine quadratische oder rechteckförmige Grundform aufweisen. In dieser Konfiguration können die Photovoltaikmodule in unterschiedlichen Drehstellungen, beispielsweise unter 0°, 90°, 180° und 270°, in den Montagerahmen eingesteckt werden. Durch geeignete Wahl der Drehstellungen kann so eine geeignete Verschaltungsrichtung der Photovoltaikmodule bewerkstelligt werden, wie vorstehend anhand der Figuren 9 und 10 beschrieben.

Beim Einstecken eines Photovoltaikmoduls dienen die konischen Spitzen 31 der Verbindungsstifte gleichzeitig auch als Ausricht- bzw. Führungsmittel, um die Photovoltaikmodule in ihre geeigneten Stellungen zu führen bzw. dort auszurichten. Dies ermöglicht eine einfache und schnelle Montage der erfindungsgemäßen Photovoltaikmodule.

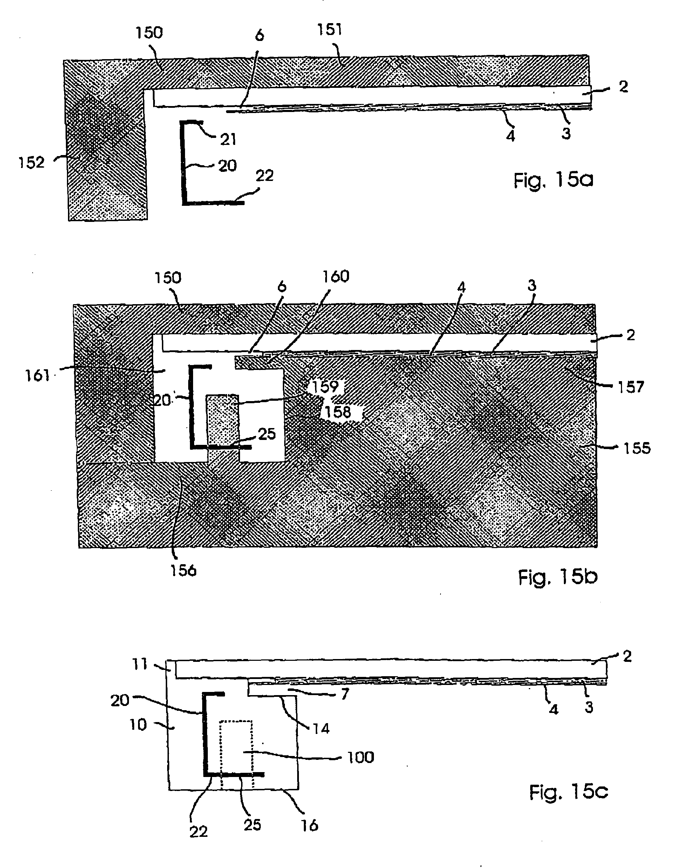

Nachfolgend wird anhand der Fig. 15a - 15c beispielhaft ein Verfahren gemäß der vorliegenden Erfindung zur Herstellung von Photovoltaikmodulen erläutert werden. Gemäß der Fig. 15a wird der eine transparente Abdeckscheibe 2 und die Solarzellen-Anordnung 3 umfassende Materialverbund auf den Boden 51 einer wannenförmigen Form 50 mit senkrecht von dem Boden abragenden Seitenwänden 52 eingebracht, so dass die Oberseite der Abdeckscheibe 2 auf dem Boden 51 anliegt. Zur Herstellung des Materialverbunds kann vorher auf die Rückseite der Abdeckscheibe 2 eine zugeschnittene Bahn EVA-Folie aufgelegt werden. Die Solarzellen werden beispielsweise im Vorfeld mittels Lötbändchen zu einzelnen Strängen verbunden und auf der Scheibe mit der EVA-Folie exakt positioniert. Anschließend werden die Querverbinder, die die einzelnen Stränge miteinander verbinden, positioniert und verlötet. Danach wird alles beispielsweise nacheinander mit einer zugeschnittenen EVA-Folie und einer Tedlar^{®}-Folie bedeckt. Als nächster Prozessschritt erfolgt das Laminieren des Moduls bei einem Unterdruck und_etwa 150° Celsius. Beim Laminieren bildet sich so aus der bis dahin milchigen EVA-Folie eine klare, dreidimensional vernetzte und nicht mehr aufschmelzbare Kunststoffschicht, in der die Solarzellen eingebettet sind und die fest mit der Abdeckscheibe und der Rückseitenfolie verbunden ist. Alternativ kann anstelle der EVA-Folie auch eine Folie aus thermoplastischen Kunststoffen wie thermoplastischem Polyurethan (TPU) oder Polyvinylbutyral (PVB) eingesetzt werden oder können die Solarzellen auch in bekannter Weise eingegossen und mit der Abdeckscheibe verbunden werden. Anschließend wird das derart produzierte Halbzeug gemäß der Fig. 15a in eine beispielsweise wannenförmige Form 50 eingelegt.

Gemäß der Fig. 15a werden die C-förmigen Profile 20 beabstandet zu den Seitenwänden 52 der Form 50 angeordnet. Zu diesem Zweck können auf dem Boden 56 einer Gegenform 55 vertikal abragende Vorsprünge 59 als Abstandshalter zum vorübergehenden Halten der Profile 20 verwendet werden. Gemäß der Fig. 15b weist die Gegenform 55 einen zentralen, erhabenen Abschnitt 57 auf, der bei dicht geschlossener Form an der Rückseite des vorgenannten Materialverbunds anliegt. Somit wird nahe den Seitenwänden der geschlossenen Form ein im Querschnitt im Wesentlichen quaderförmiger umlaufender Kanal 61 ausgebildet, in dem die Profile 20 beabstandet zu den Innenumfangswänden des Kanals 61 angeordnet sind. Von dem erhabenen Abschnitt 57 ragt ein Vorsprung 60 ab, der zur Abformung des Spalts 7 auf der Rückseite des Photovoltaikmoduls dient (vgl. Fig. 15a). Gemäß der Fig. 15b ist zwischen dem Seitenrand der Abdeckscheibe 2 und der Seitenwand 52 der Form 50 ein Spalt ausgebildet, der die Breite des oberen umlaufenden Rands 11 des Halterahmens vorgibt (vgl. Fig. 15c).

Der Halterahmen wird durch Auffüllen des umlaufenden Kanals 61 bei geschlossener Form ausgebildet, wobei die Prozessbedingungen an sich aus dem Stand der Technik hinreichend bekannt sind und hier nicht ausführlicher angeführt werden sollen. Beispielhaft angeführt seien die Prozessbedingungen und Materialien, die in US 4,830,038, US 5,008,062, DE 198 14 652 A1, DE 198 14 653 A1 und DE 202 20 444 U1 offenbart sind, wobei der Inhalt sämtlicher vorgenannter Druckschriften zu Offenbarungszwecken in die vorliegende Anmeldung ausdrücklich mit aufgenommen sei.

Schließlich wird so der im Querschnitt in der Fig. 15c wiedergegebene Halterahmen 10 ausgebildet, welcher die Abdeckscheibe und die Anordnung von Solarzellen 3 am Rand umlaufend dicht einfasst. Nach dem Entformen des Vorsprungs 59 (vgl. Fig. 15b) verbleibt im Bereich einer Öffnung 25 in dem unteren Schenkel 22 des Profils 20 ein zylindrischer Hohlraum 100, in dem beispielsweise ein mechanisches Verbindungsmittel, wie vorstehend beschrieben, aufgenommen werden kann.

Wie der Fig. 13 entnommen werden kann, können in den Halterahmen gleichzeitig auch weitere Bauelemente integriert werden (in der Fig. 13 durch das Bezugszeichen 170 angedeutet), beispielsweise ein Sensor, ein elektronisches Bauelement, beispielsweise ein Wechselrichter oder eine Bypass-Diode, oder eine elektronische Schaltung, beispielsweise eine Schaltung mit einer Bypass- bzw. Freilaufdiode oder ein Schaltkreis zur drahtlosen Nachrichtenübermittlung etc.

## Patentansprüche

1. Solarstromsystem mit
einer Mehrzahl von Montageträgern (50),
einer Mehrzahl von Photovoltaikmodulen (1), die auf die Montageträger (50) montiert sind,
einer Mehrzahl von Halteelementen (60; 100) zum Halten der Photovoltaianodule (1) an den Montageträgern (50) sowie
einer Mehrzahl von elektrischen Verbindungselementen (60) zum elektrischen Verschalten der Photovoltaikmodule, wobei:
die elektrischen Verbindungselemente (60) zwei elektrisch kontaktierend zusammensteckbare Verbindungsstecker (40-43, 70-74) umfassen;
die Photovoltaikmodule (1) jeweils am Rand zumindest abschnittsweise von einem Halterahmen (10) eingefasst sind, wobei in den Halterahmen (10) mechanische Verbindungsmittel (30) integriert sind; und
die Halteelemente (60, 100) auf den Montageträgern (50) montiert sind;
**dadurch gekennzeichnet, dass** der Halterahmen (10) aus einem Kunststoff ausgebildet ist und in den Halterahmen (10) ferner zumindest ein Verbindungsstecker (40-43, 70-74) integriert ist, wobei
die mechanischen Verbindungselemente (30) derart mit den Haltelementen (100) lösbar verrastbar oder verriegelbar sind, dass beim Verrasten oder Verriegeln der mechanischen Verbindungsmittel (30) mit den Halteelementen (100) gleichzeitig die Verbindungsstecker (40-43, 70-74) zusammengesteckt werden, um benachbarte Photovoltaikmodule (1) elektrisch miteinander zu verschalten.

2. Solarstromsystem nach Anspruch 1, bei dem die Halteelemente (60; 100) an den Montageträgern (50) längsverschieblich geführt sind und mit Feststellelementen gesichert sind.

3. Solarstromsystem nach Anspruch 1 oder 2, bei dem die mechanischen Verbindungsmittel (30) mit den Halteelementen (60; 100) so verrastet oder verriegelt sind, dass die Verbindungsstecker (40-43; 70-74) mit einer vorbestimmten Mindestkraft zusammengesteckt sind.

4. Solarstromsystem nach einem der vorhergehenden Ansprüche, bei dem die Photovoltaikmodule (1) von oben her senkrecht auf die auf den Montageträgern (30) angeordneten Halteelemente (60; 100) und elektrischen Verbindungselemente (60) so aufsetzbar oder aufsteckbar sind, dass die Verbindungsstecker zusammengesteckt sind und die Halteelemente (60; 100) und die elektrischen Verbindungselemente (60) von den von den Halteelementen (60) gehaltenen Photovoltaikmodulen (1) vollständig oder mit Ausnahme eines schmalen Spalts zwischen jeweils zwei benachbarten Photovoltaikmodulen (1) abgedeckt sind.

5. Solarstromsystem nach einem der vorhergehenden Ansprüche, bei dem die Halteelemente (100) einen Verrastungs- oder Verriegelungsmechanismus (106, 109) zum lösbaren Verrasten oder Verriegeln der mechanischen Verbindungsmittel (30) mit den Halteelementen (100) aufweisen.

6. Solarstromsystem nach Anspruch 5, bei dem ein Betätigungselement zum Bestätigen des Verrastungs- oder Verriegelungsmechanismus (106, 109) über einen Rand des Halterahmens (10) hinausragt, sodass der Verrastungs- oder Verriegelungsmechanismus (106, 109) mit einem Werkzeug durch den Spalt zwischen jeweils zwei benachbarten Photovoltaikmodulen (1) hindurch betätigbar ist, um das zugeordnete mechanische Verbindungsmittel (30) wahlweise zu verrasten bzw. zu verriegeln oder freizugeben.

7. Solarstromsystem nach Anspruch 5 oder 6, wobei der Verrastungs- oder Verriegelungsmechanismus zumindest eine an dem Halteelement drehbeweglich gelagerte Klaue (106) umfasst, die eine exzentrische, umfängliche Aussparung (109) zum Aufnehmen des zugeordneten mechanischen Verbindungsmittels (30) aufweist und dieses beim Drehen in eine Haltestellung verrastet oder verriegelt.

8. Solarstromsystem nach Anspruch 7, wobei die Halteelemente (100) ferner zumindest eine Aussparung (104) zum Aufnehmen des zugeordneten mechanischen Verbindungsmittels (30) aufweisen, sodass dieses in einer vorbestimmten Stellung an dem jeweiligen Halteelement (100) verrastet oder verriegelt ist.

9. Solarstromsystem nach einem der vorhergehenden Ansprüche, wobei die mechanischen Verbindungsmittel (30) von einer Unterseite oder von einer Seitenfläche oder von zwei Seitenflächen des Halterahmens (10) bevorzugt senkrecht abragen.

10. Solarstromsystem nach Anspruch 9, bei dem die mechanischen Verbindungsmittel (30) jeweils innerhalb einer in dem Halterahmen (10) ausgebildeten Aussparung (18) angeordnet sind, in welcher der jeweils zugeordnete Verrastungs- oder Verriegelungsmechanismus (106, 109) aufgenommen ist, wobei Seitenwände (101, 102) der Halteelements (100) eine Aufnahme ausbilden, die korrespondierend zu dem aufzunehmenden Halterahmenabschnitt ausgebildet ist.

11. Solarstromsystem nach einem der vorhergehenden Ansprüche, bei dem die Montageträger (50) als Endlosprofile mit zumindest einer sich in Längsrichtung erstreckenden Aussparung (51) oder zumindest einem sich in Längsrichtung erstreckenden Vorsprung (53) ausgebildet sind, in die bzw. den ein korrespondierend ausgebildetes Formschlussgebilde (102, 103; 67-68) der Halteelementen (60; 100) und/oder elektrischen Verbindungselemente (60) dergestalt formschlüssig eingreifen, dass diese an den Montageträgern (50) in Längsrichtung verschiebbar geführt und in einer Richtung senkrecht dazu mit einem verschwindenden oder vorbestimmten Spiel gelagert sind.

12. Solarstromsystem nach Anspruch 11, wobei eine Position der Halteelemente (60; 100) in Längsrichtung der Montageträger (50) festlegbar ist.

13. Solarstromsystem nach Anspruch 12, wobei die Position der Halteelemente (60; 100) in Längsrichtung der Montageträger (50) durch Verrasten oder Verriegeln der Verbindungsmittel (30) mit dem Halteelementen (60; 100) festlegbar ist.

14. Solarstromsyslem nach einem der vorhergehenden Ansprüche, bei dem die Halteelemente (100) und die elektrischen Verbindungselemente (60) als gesonderte Elemente ausgebildet sind, die in einer vorbestimmten Lage relativ zueinander in Entsprechung zur Lage der mechanischen Verbindungsmittel (30) und der Vcrbindungsstecker (40-43, 70-74) an dem Halterahmen (10) an den Montageträgern anordenbar sind.

15. Solarstromsystem nach Anspruch 14, wobei in den elektrischen Verbindungsmitteln (60, 100) zumindest eine Bypass-Diode (80) vorgesehen ist, die in Sperrrichtung betrieben wird, wenn das zugeordnete Photovoltaikmodl (1) beleuchtet ist.

16. Solarstromsystem nach einem der Ansprüche 1 bis 13, bei dem die Halteelemente und die elektrischen Verbindungselemente einstückig als mit elektrischen Verbindungssteckern (70-74) versehene Verbindungselemente ausgebildet sind, um die Photovoltaikmodule (1) an den Montageträgern (50) zu halten und elektrisch miteinander zu verschalten.

17. Solarstromsystem nach Anspruch 16, wobei in den elektrischen Verbindungsmitteln (60; 100) zumindest eine Bypass-Diode (80) vorgesehen ist, die in Sperrrichtung betrieben wird, wenn das zugeordnete Photovoitaikmodul (1) beleuchtet ist.

18. Solarstromsystem nach Anspruch 16 oder 17, wobei die Verbindungselemente (60) den zugeordneten Montageträger (50) klammerartig umgreifen und Verrastungsmittel (65) auf Innen- oder Seitenflächen (62, 63) der Verbindungselemente (60) vorgesehen sind.

19. Solarsystem nach Anspruch 18, wobei die Verrastungsmittel (65) in eine Verrastungsstellung zum Verrasten der Verbindungselemente (60) mit dem zugeordneten Montageträger (50) vorgespannt sind.

20. Solarsystem nach einem der Ansprüche 16 bis 19, wobei die Verbindungselemente (60) Steckerbuchsen (72) und/oder Steckerdosen (70, 74) aufweisen, die mit korrespondierend ausgebildeten Steckerdosen (40) und/oder Steckerbuchsen am Halterahmen (10) eines jeweiligen Photovoltaikmoduls (1) zusammen wirken, wobei die Steckerbuchsen und/oder Steckerdosen eines jeweiligen Verbindungselements (60) zwei zueinander benachbarte Photovoltaikmodule (1) so elektrisch miteinander verschalten, dass ein Photovoltaikmodul (1) mittels einer zugeordneten Bypass-Diode (80) überbrückt ist.

21. Solarsystem nach Anspruch 20, mit zwei unterschiedlichen Typen von Verbindungselementen (60), nämlich einem ersten Typ (60), der für eine elektrische Verbindung von zwei benachbarten Photovoltaikmodulen (1) auf gegenüber liegenden Seiten des Montageträgers (50) ausgelegt ist, und einem zweiten Typ (60'), der für eine elektrische Verbindung von zwei benachbarten Photovoltaikmodulen (1) auf der selben Seite des Montageträgers (50) ausgelegt ist.

22. Solarsystem nach Anspruch 21, wobei der erste Typ von Verbindungselement (60) einen ersten elektrischen Steckverbinder (74) zur Anordnung auf einer ersten Seite des Montageträgers (50) sowie zwei weitere elektrische Steckverbinder (70, 72) zur Anordnung auf einer gegenüber liegenden zweiten Seite des Montageträgers (50) aufweist.

23. Solarsystem nach Anspruch 21, wobei der zweite Typ von Verbindungselement (60') einen ersten elektrischen Steckverbinder (74) zur Anordnung auf einer ersten Seite des Montageträgers (50) sowie zwei weitere elektrische Steckverbinder (70, 72) auf derselben Seite des Montageträgers (50) aufweist.

24. Solarsystem nach einem der vorhergehenden Ansprüche, wobei in den Halterahmen (10) ferner ein Verankerungsmittel (20) integriert ist, das sich zumindest abschnittsweise entlang von Längsseiten des Photovoltaikmoduls (1) erstreckt, wobei die mechanischen Verbindungsmittel (30) in das Verankerungsmittel (20) eingreifen, um ein Ausreißen derselben aus bzw. von dem Halterahmen zu verhindern.

25. Solarsystem nach einem der vorhergehenden Ansprüche, wobei das Verankerungsmittel (20) eine Basisfläche (22) aufweist, die sich im Wesentlichen parallel zu einer von dem Materialverbund (2-4) aufgespannten Ebene erstreckt

26. Solarsystem nach Anspruch 25, wobei das Verankerungsmittel (20) ferner eine davon im Wesentlichen senkrecht abragende Struktur (26) aufweist.

27. Solarsystem nach Anspruch 25 oder 26, wobei das Verankerungsmittel als zur Innenseite des Photovoltaikmoduls (1) offenes Hohlprofil (20) ausgebildet ist, das vollständig unterhalb der von dem Materialverbund (2-4) aufgespannten Ebene angeordnet ist.

28. Solarsystem nach Anspruch 27, wobei das Hohlprofil (20) C-förmig ausgebildet ist und einen oberen Schenkel (21), der sich parallel zu einer von dem Materialverbund (2-4) aufgespannten Ebene erstreckt, und einen dazu beabstandeten und parallelen unteren Schenkel (22) aufweist, der die Basisfläche bildet.

29. Solarsystem nach einem der Ansprüche 25 bis 28, wobei in der Basisfläche (22) zumindest eine Öffnung (24) ausgebildet ist, durch die hindurch sich ein Leiter- bzw. Kontaktstift (41) des jeweiligen elektrischen Verbindungsmittels erstreckt, der mit zumindest einer Solarzelle (3) eines Photovoltaikmoduls (1) verbindet.

30. Solarstromsystem nach einem der Ansprüche 24 bis 26, wobei das Verankerungsmittel als geschlossenes Hohlprofil ausgebildet und in den Halterahmen (10) so eingegossen ist, dass Kunststoffmaterial aus dem Inneren des Hohlprofils verdrängt ist.

31. Solarsystem nach einem der Ansprüche 25 bis 30, wobei das jeweilige elektrische Verbindungsmittel (40-43) innerhalb eines in dem Halterahmen (10) ausgebildeten Hohlraums vorgesehen ist, auf dessen Innenumfangswand ein Formschlussgebilde (44) zur Kopplung, insbesondere abgedichteten Kopplung, mit einem komplementären Steckverbinder (45-47) des zugeordneten Montagerahmens (34) vorgesehen oder ausgebildet ist.

32. Solarsystem nach einem der vorhergehenden Ansprüche, wobei der Halterahmen (10) in Bereichen ohne mechanische Ausricht- und/oder Verbindungsmittel (30) und elektrischen Verbindungsmittel (40-43) abgeflacht ausgebildet oder mit einer sich in Umfangsrichtung erstreckenden Aussparung versehen ist, wobei die Aussparung das Material des Halterahmens (10) auswärts durchgreift, um eine Öffnung zur Hinterlüftung der zumindest einen Solarzelle auszubilden.

33. Solarsystem nach einem der vorhergehenden Ansprüche, bei dem die mechanischen Verbindungsmittel (30) und/oder der bzw. die Verbindungsstecker (40-43, 70-74) auf einander gegenüberliegenden Längsseiten des rechteckförmigen oder quadratischen Photovoltaikmoduls (1) an identischen Positionen so vorgesehen sind, dass die Photovoltaikmodule (1) wahlweise in unterschiedlichen Drehstellungen auf die Montageträger (50) montierbar sind, um eine geeignete elektrische Verschaltung der Photovoltaikmodule (1) in Entsprechung zu deren jeweiliger Drehstellung zu ermöglichen.

34. Solarsystem nach Anspruch 33, bei dem die die mechanischen Verbindungsmittel (30) und/oder der bzw. die Verbindungsstecker (40-43, 70-74) auf einander gegenüberliegenden Längsseiten des rechteckförmigen oder quadratischen Photovoltaikmoduls (1) an identischen Positionen so vorgesehen sind, dass in einer ersten Drehstellung eine elektrische Verbindung zu einem horizontal benachbarten Photovoltaikmodul (1) ausbildbar ist und in einer zweiten, unterschiedlichen Drehstellung, die bevorzugt um 180° relativ zu der ersten Drehstellung verdreht ist, eine elektrische Verbindung zu einem vertikal benachbarten Photovoltaikmodul (1) ausbildbar ist.

35. Solarstromsystem nach einem der vorhergehenden Ansprüche, bei dem der Halterahmen bündig mit einer eine Vorderseite des Photovoltaikmoduls (1) bildenden transparenten Abdeckscheibe (2) abschließt.

36. Solarstromsystem nach einem der vorhergehenden Ansprüche, bei dem in den Halterahmen (10) ferner zumindest eine Bypass-Diode eingegossen oder eingespritzt ist, die in Sperrrichtung betrieben wird, wenn das zugeordnete Photovoltaikmodul (1) beleuchtet ist.

37. Solarsystem nach einem der vorhergehenden Ansprüche, weiterhin umfassend ein Wechselrichter-Modul (90), das ein identisches oder abgestimmtes äußeres Erscheinungsbild wie die Photovoltaikmodule (1) aufweist und in identischer Weise auf den oder die Montageträger (50) montiert ist.

38. Solarsystem nach Anspruch 37, wobei das Wechselrichter-Modul (90) eine Abdeckscheibe (2') aufweist, die farblich abgestimmt ist auf die transparente Abdeckscheibe (2) mit der darunter befindlichen, mit einer Rückseitenfolie versehenen Solarzellenanordnung (3) eines Photovoltaikmoduls, wobei auf einer Rückseite der Abdeckscheibe (2') ein Wechselrichter (93) gehalten ist und ein Halterahmen (10) aus einem bevorzugt elastomeren Kunststoff die Abdeckscheibe (2') am Rand zumindest abschnittsweise einfasst und die Abdeckscheibe (2') hält.

39. Solarsystem nach Anspruch 38, wobei zwischen der transparenten Abdeckscheibe (2') des Wechselrichter-Moduls (90) und einem Wechselrichter (93) ein Spalt ausgebildet ist, um einen Abtransport von Abwärme des Wechselrichters (93) durch Luftkonvektion zu ermöglichen.

40. Solarsystem nach einem der vorhergehenden Ansprüche, bei dem die Halteelemente (60; 100) elastische Ausgleichsmittel umfassen, um die Einleitung von Spannungen in die Photovoltaikmodule zu verringern.

41. Solarsystem nach einem der Ansprüche 5 bis 7, bei dem der Verrastungs- oder Verriegelungsmechanismus ferner ausgelegt ist, um das Photovoltaikmodul bzw. das zugeordnete mechanische Verbindungsmittel (30) in einer Haltestellung gegen das Halteelement (100) bzw. die Montageträger (50) vorzuspannen.

## Claims

1. A solar power system comprising
a plurality of mounting supports (50),
a plurality of photovoltaic modules (1) mounted on the mounting supports (50),
a plurality of holding elements (60; 100) for holding the photovoltaic modules (1) on the mounting supports (50) and
a plurality of electric connecting elements (60) for electrically interconnecting the photovoltaic modules, wherein:
said electric connecting elements (60) comprise two electrically contacting connecting plugs (40-43, 70-74) which can be plugged together;
the photovoltaic modules (1) are each bordered at the edge at least in sections by a holding frame (10), wherein mechanical connecting means (30) are integrated in the holding frame; and
the holding elements (60, 100) are mounted onto the mounting supports (50);
**characterised in that** the holding frame (10) is made of a plastic and at least one connecting plug (40-43, 70-74) is integrated in the holding frame (10), wherein
the mechanical connecting means (30) arc latched or interlocked to the holding elements (100) in a detachable manner such that the connecting plugs (40-43, 70-74) are plugged together while the mechanical connecting means (30) are latched or interlocked to the holding elements (100) in order to electrically interconnect adjacent photovoltaic modules (1).

2. The solar power system as claimed in claim 1, wherein the holding elements (60; 100) are guided slidably in longitudinal direction on the mounting supports (50) and are secured by means of securing elements.

3. The solar power system as claimed in claim 1 or 2, wherein the mechanical connecting means (30) are latched or interlocked to the holding elements (60; 100) in such a manner that the connecting plugs (40-43; 70-74) are plugged together with a predetermined minimum force.

4. The solar power system as claimed in any of the preceding claims, wherein the photovoltaic modules (1) can be placed or plugged from above perpendicularly onto the holding elements (60; 100) arranged on the mounting supports (30) and onto the electric connecting elements (60) so that the connecting plugs are plugged together and the holding elements (60; 100) and the electric connecting elements (60) are covered fully or with the exception of a narrow gap by the photovoltaic modules (1) held by the holding elements (60) in each case between two adjacent photovoltaic modules (1).

5. The solar power system as claimed in any of the preceding claims, wherein the holding elements (100) comprise a latching or interlocking mechanism (106, 109) for the detachable latching or interlocking of the mechanical connecting means (30) to the holding elements (100).

6. The solar power system as claimed in claim 5, wherein an actuating element for actuating the latching or interlocking mechanism (106, 109) protrudes over an edge of the holding frame (10) so that the latching or interlocking mechanism (106, 109) can be actuated by a tool via the gap in each case between two adjacent photovoltaic modules (1) in order optionally to latch or interlock or to release the associated mechanical connecting means (30).

7. The solar power system as claimed in claim 5 or 6, said latching or interlocking mechanism comprising at least one claw (106) being rotationally supported on the holding element, which has an eccentric, circumferential recess (109) for accommodating the associated mechanical connecting means (30) and latches or interlocks it in a holding position on rotation.

8. The solar power system as claimed in claim 7, said holding elements (100) further comprising at least one recess (104) for accommodating the associated mechanical connecting means (30) so that it is latched or interlocked in a predetermined position on the respective holding element (100).

9. The solar power system as claimed in any of the preceding claims, wherein the mechanical connecting means (30) protrude preferably perpendicularly from an underside or from one or two side faces of the holding frame (10).

10. The solar power system as claimed in claim 9, wherein the mechanical connecting means (30) are each disposed within a recess (18) formed in the holding frame (10), in which the respective associated latching or interlocking mechanism (106, 109) is accommodated, with side walls (101, 102) of the holding elements (100) forming a receptacle formed in correspondence to the holding frame portion to be accommodated.

11. The solar power system as claimed in any of the preceding claims, wherein the mounting supports (50) are formed as endless profiles with at least one recess (51) extending in the longitudinal direction or at least one projection (53) extending in the longitudinal direction, into which a correspondingly formed positive fitting structure (102, 103; 67-68) of the holding elements (60, 100) and/or electric connecting elements (60) engage in a positive fitting manner in such a manner that they are displaccably guided on the mounting supports (50) in the longitudinal direction and mounted in a direction perpendicularly thereto with a vanishing or predetermined clearance.

12. The solar power system as claimed in claim 11, wherein a position of the holding elements (60; 100) in the longitudinal direction of the mounting supports (50) can be defined.

13. The solar power system as claimed in claim 12, wherein the position of the holding clements (60; 100) in the longitudinal direction of the mounting supports (50) can be defined by latching or interlocking the connecting means (30) to the holding elements (60; 100).

14. The solar power system as claimed in any of the preceding claims, wherein the holding elements (100) and the electric connecting elements (60) are embodied as separate elements, which can be arranged in a predetermined position relative to each other corresponding to the position of the mechanical connecting means (30) and the connecting plugs (40-43, 70-74) on the holding frame (10) on the mounting supports.

15. The solar power system as claimed in claim 14, wherein at least one bypass diode (80) is provided in the electric connecting means (60, 100), which is operated in the reverse direction when the associated photovoltaic module (1) is illuminated.

16. The solar power system as claimed in any of claims 1 to 13, wherein the holding elements and the electric connecting elements are embodied in one piece as connecting elements provided with electric connecting plugs (70-74) in order to hold the photovoltaic modules (1) on the mounting supports (50) and interconnect them electrically.

17. The solar power system as claimed in claim 16, wherein at least one bypass diode (80) is provided in the electric connecting means (60, 100), which is operated in the reverse direction when the associated photovoltaic module (1) is illuminated.

18. The solar power system as claimed in claim 16 or 17, wherein the connecting elements (60) encompass the associated mounting supports (50) in a clamp-like manner and wherein latching means (65) are provided on inner faces or side faces (62, 63) of the connecting elements (60).

19. The solar power system as claimed in claim 18, wherein the latching means (65) are prestressed in a latching position for latching the connecting elements (60) to the associated mounting supports (50).

20. The solar power system as claimed in any of claims 16 to 19, wherein the connecting elements (60) comprise plug sockets (72) and/or plug outlets (70, 74) which interact with correspondingly formed plug outlets (40) and/or plug sockets on the holding frame (10) of a respective photovoltaic module (1), with the plug sockets and/or plug outlets of a respective connecting element (60) electrically connecting two adjacent photovoltaic modules (1) to each other in such a way that a photovoltaic module (1) is bridged by means of an associated bypass diode (80).

21. The solar power system as claimed in claim 20, comprising two different types of connecting elements (60), namely a first type (60) designed for an electric connection of two adjacent photovoltaic modules (1) on opposing sides of the mounting support (50) and a second type (60'), which is designed for an electric connection of two adjacent photovoltaic modules (1) on the same side of the mounting support (50).

22. The solar power system as claimed in claim 21, wherein the first type of connecting element (60) comprises a first electric plug-in connector (74) for arrangement on a first side of the mounting support (50) and two further electric plug-in connectors (70, 72) for arrangement on an opposing second side of the mounting support (50).

23. The solar power system as claimed in claim 21, wherein the second type of connecting element (60') comprises a first electric plug-in connector (74) for arrangement on a first side of the mounting support (50) and two further electric plug-in connectors (70, 72) on the same side of the mounting support (50).

24. The solar power system as claimed in any of the preceding claims, wherein an anchoring means (20) is further integrated in the holding frame (10), which extends at least in sections along longitudinal sides of the photovoltaic module (1), wherein the mechanical connecting means (30) engages in the anchoring means (20) in order to prevent them from being torn from or out of the holding flame.

25. The solar power system as claimed in any of the preceding claims, said anchoring means (20) comprising a base (22) extending substantially parallel to a plane spanned by the material composite (2-4).

26. The solar power system as claimed in claim 25, said anchoring means (20) further comprising a structure (26) protruding substantially perpendicularly therefrom.

27. The solar power system as claimed in claim 25 or 26, said anchoring means being embodied as a hollow profile (20) open toward the inner side of the photovoltaic module (1) which is completely disposed below the plane spanned by the material composite (2-4).

28. The solar power system as claimed in claim 27, wherein said hollow profile (20) is C-shaped and comprises an upper limb (21) extending parallel to a plane spanned by the material composite (2-4) and a lower limb arranged at a distance therefrom and parallel thereto (22) which forms the base.

29. The solar power system as claimed in any of claims 25 to 28, wherein at least one opening (24) is formed in the base (22) through which opening a conductor or contact pin (41) of the respective electric connecting means extends which is connected to at least one solar cell (3) of a photovoltaic module (1).

30. The solar power system as claimed in any of claims 24 to 26, wherein the anchoring means is formed as a closed hollow profile and is cast into the holding frame (10) in such a way that plastic material is forced out of the interior of the hollow profile.

31. The solar power system as claimed in any of claims 25 to 30, wherein the respective electric connecting means (40-43) is provided within a hollow space formed in the holding frame (10) on the inner circumferential wall of which a positive locking structure (44) is provided or embodied for coupling, in particular sealed coupling, to a complementary plug-in connector (45-47) of the associated mounting frame (34).

32. The solar power system as claimed in any of the preceding claims, wherein the holding frame (10) is formed flattened in regions without mechanical alignment and/or connecting means (30) and electric connecting means (40-43) or is provided with a recess extending in the circumferential direction, wherein the recess penetrates through the material of the holding frame (10) in outward direction in order to form an opening for the rear ventilation of the at least one solar cell.

33. The solar power system as claimed in any of the preceding claims, wherein the mechanical connecting means (30) and/or the or the connecting plug or plugs (40-43, 70-74) on opposing longitudinal sides of the rectangular or square-shaped photovoltaic module (1) are provided at identical positions in such a way that the photovoltaic modules (1) can be optionally mounted in different rotational positions on the mounting supports (50) in order to enable a suitable electric interconnection of the photovoltaic modules (1) in correspondence to their respective rotational position.

34. The solar power system as claimed in claim 33, wherein the mechanical connecting means (30) and/or the connecting plug or plugs (40-43, 70-74) arc provided on opposing longitudinal sides of the rectangular or square-shaped photovoltaic module (1) at identical positions in such a way that, in a first rotational position, an electric connection to a horizontally adjacent photovoltaic module (1) can be established and, in a second, different rotational position, which is preferably rotated 180° relative to the first rotational position, an electric connection to a vertically adjacent photovoltaic module (1) can be established.

35. The solar power system as claimed in any of the preceding claims, wherein the holding frame is flush with a transparent cover plate (2) forming a front side of the photovoltaic module (1).

36. The solar power system as claimed in any of the preceding claims, wherein further at least one bypass diode is cast or injection-moulded in the holding frame (10), which is operated in the reverse direction when the associated photovoltaic module (1) is illuminated.

37. The solar power system as claimed in any of the preceding claims, further comprising an inverter module (90) with an external appearance identical or adapted to that of the photovoltaic modules (1) and mounted in an identical way on the mounting support or supports (50).

38. The solar power system as claimed in claim 37, wherein said inverter module (90) comprises a cover plate (2') which is colour-matched to the transparent cover plate (2) with the underlying solar cell arrangement (3) of a photovoltaic module provided with a rear film, wherein an inverter (93) is held on a rear side of the cover plate (2') and a holding frame (10) made of a preferably elastomeric plastic borders the cover plate (2') at the edge at least in sections and holds the cover plate (2').

39. The solar power system as claimed in claim 38, wherein a gap is formed between the transparent cover plate (2') of the inverter module (90) and an inverter (93) in order to enable the waste heat from the inverter (93) to be removed by air convection.

40. The solar power system as claimed in any of the preceding claims, wherein the holding elements (60; 100) comprise elastic compensation means in order to reduce the introduction of stresses into the photovoltaic modules.

41. The solar power system as claimed in any of claims 5 to 7, wherein the latching or interlocking mechanism is further configured to prestress the photovoltaic module or the associated mechanical connecting means (30) in a holding position against the holding element (100) or the mounting supports (50).

## Revendications

1. Système d'électricité solaire, comprenant
- une pluralité de supports de montage (50),
- une pluralité de modules photovoltaïques (1) qui sont montés sur les supports de montage (50),
- une pluralité d'éléments de retenue (60 ; 100) pour retenir les modules photovoltaïques (1) sur les supports de montage (50), ainsi que
- une pluralité d'éléments de connexion électrique (60) pour le câblage électrique des modules photovoltaïques,
dans lequel :
- les éléments de connexion électrique (60) comprennent deux fiches de connexion (40 à 43, 70 à 74) pouvant être assemblées en établissant un contact électrique ;
- les modules photovoltaïques (1) sont respectivement entourés au bord au moins par endroits par un cadre de retenue (10), dans lequel des moyens de connexion mécanique (30) sont intégrés dans le cadre de retenue (10) ; et
- les éléments de retenue (60, 100) sont montés sur les supports de montage (50) ;
**caractérisé en ce que** le cadre de retenue (10) est réalisé en matière plastique, et **en ce que** dans le cadre de retenue (10), en outre au moins une fiche de connexion (40 à 43, 70 à 74) est intégré, dans lequel
- les éléments de connexion mécanique (30) peuvent être enclenchés ou verrouillés de façon amovible avec les éléments de retenue (100), de telle sorte que lors de l'enclenchement ou du verrouillage des moyens de connexion mécanique (30) avec les éléments de retenue (100), les fiches de connexion (40 à 43, 70 à 74) sont assemblées en même temps, afin d'établir le câblage électrique entre des modules photovoltaïques (1) adjacents.

2. Système d'électricité solaire selon la revendication 1, dans lequel les éléments de retenue (60 ; 100) sont guidés de façon mobile longitudinalement sur les supports de montage (50) et sont ancrés par des éléments de blocage.

3. Système d'électricité solaire selon la revendication 1 ou 2, dans lequel les moyens de connexion mécanique (30) sont enclenchés ou verrouillés avec les éléments de retenue (60 ; 100) de telle sorte que les fiches de connexion (40 à 43 ; 70 à 74) sont assemblées avec une force minimale prédéterminée.

4. Système d'électricité solaire selon l'une quelconque des revendications précédentes, dans lequel les modules photovoltaïques (1) peuvent être posés ou emboîtés par le haut verticalement sur les éléments de retenue (60 ; 100) disposés sur les supports de montage (30) et les éléments de connexion électrique (60), de telle sorte que les fiches de connexion sont assemblées et les éléments de retenue (60 ; 100) et les éléments de connexion électrique (60) sont recouverts par les modules photovoltaïques (1) retenus par les éléments de retenue (60) soit complètement, soit à l'exception d'un petit interstice entre respectivement deux modules photovoltaïques (1) adjacents.

5. Système d'électricité solaire selon l'une quelconque des revendications précédentes, dans lequel les éléments de retenue (100) présentent un mécanisme d'enclenchement ou de verrouillage (106, 109) pour l'enclenchement ou le verrouillage amovible des moyens de connexion mécanique (30) avec les éléments de retenue (100).

6. Système d'électricité solaire selon la revendication 5, dans lequel un éléments d'actionnement pour actionner le mécanisme d'enclenchement ou de verrouillage (106, 109) dépasse du bord du cadre de retenue (10), de sorte que le mécanisme d'enclenchement ou de verrouillage (106, 109) peut être actionné à l'aide d'un outil à à travers l'interstice entre respectivement deux modules photovoltaïques (1) adjacents afin d'enclencher ou de verrouiller ou bien de libérer, au choix, le moyen de connexion mécanique (30) associé.

7. Système d'électricité solaire selon la revendication 5 ou 6, dans lequel le mécanisme d'enclenchement ou de verrouillage comprend au moins une griffe (106) pivotante sur l'élément de retenue qui présente un évidement (109) excentrique, circonférentiel, pour recevoir les moyens de connexion mécanique (30) associés et qui, en cas de rotation, les enclenche ou les verrouille dans une position de retenue.

8. Système d'électricité solaire selon la revendication 7, dans lequel les éléments de retenue (100) présentent en outre au moins un évidement (104) pour recevoir les moyens de connexion mécanique (30) associés, de sorte que ceux-ci sont enclenchés ou verrouillés dans une position prédéterminée sur l'élément de retenue (100) respectif.

9. Système d'électricité solaire selon l'une quelconque des revendications précédentes, dans lequel les moyens de connexion mécanique (30) font de préférence saillie à partir d'un côté inférieur ou d'une surface latérale ou de deux surfaces latérales du cadre de retenue (10).

10. Système d'électricité solaire selon la revendication 9, dans lequel les moyens de connexion mécanique (30) sont respectivement disposés à l'intérieur d'un évidement (18) réalisé dans le cadre de retenue (10) et dans lequel est reçu le mécanisme d'enclenchement ou de verrouillage (106, 109) respectivement associé, dans lequel des parois latérales (101, 102) des éléments de retenue (100) réalisent un logement qui est réalisé de façon correspondante à la portion de cadre de retenue à recevoir.

11. Système d'électricité solaire selon l'une quelconque des revendications précédentes, dans lequel les supports de montage (50) sont réalisés comme des profilés continus avec au moins un évidement (51) s'étendant dans la direction longitudinale ou au moins une saillie (53) s'étendant dans la direction longitudinale, dans lequel ou laquelle une structure à complémentarité de forme (102, 103 ; 67 à 68), réalisée de façon correspondante, des éléments de retenue (60 ; 100) et/ou des éléments de connexion électrique (60) s'engagent par complémentarité de forme de telle sorte qu'ils sont guidés sur les supports de montage (50) de façon mobile dans la direction longitudinale et sont logés dans une direction perpendiculaire à celle-ci avec un jeu infiniment petit ou prédéterminé.

12. Système d'électricité solaire selon la revendication 11, dans lequel une position des éléments de retenue (60 ; 100) peut être définie dans la direction longitudinale des supports de montage (50).

13. Système d'électricité solaire selon la revendication 12, dans lequel la position des éléments de retenue (60 ; 100) peut être définie dans la direction longitudinal des supports de montage (50) pour l'enclenchement ou le verrouillage des moyens de connexion (30) avec les éléments de retenue (60 ; 100).

14. Système d'électricité solaire selon l'une quelconque des revendications précédentes, dans lequel les éléments de retenue (100) et les éléments de connexion électrique (60) sont réalisés comme des éléments séparés, qui peuvent être agencés dans une position prédéterminée les uns par rapport aux autres en correspondance avec la positon des moyens de connexion mécanique (30) et des fiches de connexion (40 à 43, 70 à 74) sur le cadre de retenue (10) sur les supports de montage.

15. Système d'électricité solaire selon la revendication 14, dans lequel dans les moyens de connexion électrique (60, 100), au moins une diode de dérivation (80) est prévue qui est exploitée dans la direction inverse lorsque le module photovoltaïque (1) associé est illuminé.

16. Système d'électricité solaire selon l'une quelconque des revendications 1 à 13, dans lequel les éléments de retenue et les éléments de connexion électrique sont réalisés d'une seule pièce comme des éléments de connexion munis de fiches de connexion électrique (70 à 74) afin de retenir les modules photovoltaïques (1) sur les supports de montage (50) et réaliser leur câblage électrique.

17. Système d'électricité solaire selon la revendication 16, dans lequel dans les moyens de connexion électrique (60 ; 100), au moins une diode de dérivation (80) est prévue qui est exploitée dans la direction inverse lorsque le module photovoltaïque (1) associé est illuminé.

18. Système d'électricité solaire selon la revendication 16 ou 17, dans lequel les éléments de connexion (60) saisissent le support de montage (50) associé à la manière d'une pince et des moyens d'enclenchement (65) sont prévus sur les surfaces intérieures ou latérales (62, 63) des éléments de connexion (60).

19. Système solaire selon la revendication 18, dans lequel les moyens d'enclenchement (65) sont précontraints dans une position d'enclenchement pour enclencher les éléments de connexion (60) avec le support de montage (50) associé.

20. Système solaire selon l'une quelconque des revendications 16 à 19, dans lequel les éléments de connexion (60) présentent des prises mâles (72) et/ou des prises femelles (70, 74) qui coopèrent avec des prises femelles (40) et/ou des prises mâles réalisées de façon correspondante sur le cadre de retenue (10) d'un module photovoltaïque (1) respectif, dans lequel les prises mâles et/ou les prises femelles d'un élément de connexion (60) respectif réalisent le câblage électrique de deux modules photovoltaïques (1) adjacents entre eux, de telle sorte qu'un module photovoltaïque (1) est shunté au moyen d'une diode de dérivation (80) associée.

21. Système solaire selon la revendication 20, comprenant deux types différents d'éléments de connexion (60), notamment un premier type (60) qui est conçu pour une connexion électrique de deux modules photovoltaïques (1) adjacents sur des côtés opposés du support de montage (50), et un deuxième type (60') qui est conçu pour une connexion électrique de deux modules photovoltaïques (1) adjacents du même côté du support de montage (50).

22. Système solaire selon la revendication 21, dans lequel le premier type d'élément de connexion (60) présente une première fiche électrique (74) à disposer sur un premier côté du support de montage (50) ainsi que deux autres fiches électriques (70, 72) à disposer sur un deuxième côté opposé du support de montage (50).

23. Système scolaire selon la revendication 21, dans lequel le deuxième type d'élément de connexion (60') présente une première fiche électrique (74) à disposer sur un premier côté du support de montage (50) ainsi que deux autres fiches électriques (70, 72) à disposer du même côté du support de montage (50).

24. Système solaire selon l'une quelconque des revendications précédentes, dans lequel, dans le cadre de retenue (10), en outre des moyens d'ancrage (20) sont intégrés qui s'étendent au moins par endroits le long des côtés longitudinaux du module photovoltaïque (1), dans lequel les moyens de connexion mécanique (30) s'engagent dans les moyens d'ancrage (20) pour empêcher leur arrachage du cadre de retenue.

25. Système solaire selon l'une quelconque des revendications précédentes, dans lequel les moyens d'ancrage (20) présentent une surface de base (22) qui s'étend substantiellement en parallèle à un plan fixé par le matériau composite (2 à 4).

26. Système solaire selon la revendication 25, dans lequel les moyens d'ancrage (20) présentent en outre une structure (26) faisant saillie substantiellement perpendiculairement à partir de ceux-ci.

27. Système solaire selon la revendication 25 ou 26, dans lequel les moyens d'ancrage sont réalisés comme un profilé creux (20) ouvert vers le côté intérieur du module photovoltaïques (1) et qui est disposé complètement au-dessous du plan fixé par le matériau composite (2 à 4).

28. Système solaire selon la revendication 27, dans lequel le profilé creux (20) est réalisé en forme de C et présente une branche supérieure (21), qui s'étend en parallèle à un plan fixé par le matériau composite (2 à 4), et une branche intérieure (22) espacée de et parallèle à celle-ci et qui forme la surface de base.

29. Système solaire selon l'une quelconque des revendications 25 à 28, dans lequel dans la surface de base (22), au moins une ouverture (24) est réalisée, à travers laquelle s'étend une broche conductrice ou de contact (41) des moyens de connexion électrique respectifs qui est reliée à au moins une cellule solaire (3) d'un module photovoltaïque (1).

30. Système d'électricité solaire selon l'une quelconque des revendications 24 à 26, dans lequel les moyens d'ancrage sont réalisés comme un profilé creux fermé et sont coulés dans le cadre de retenue (10) de telle sorte que de la matière plastique est refoulée de l'intérieur du profilé creux.

31. Système solaire selon l'une quelconque des revendications 25 à 30, dans lequel les moyens de connexion électrique (40 à 43) sont prévus à l'intérieur d'une cavité réalisée dans le cadre de retenue (10), sur la paroli circonférentielle intérieure de laquelle une structure à complémentarité de forme (44) est prévue ou réalisée pour un accouplement, en particulier un accouplement étanche, avec une fiche complémentaire (45 à 47) du cadre de montage (34) associé.

32. Système solaire selon l'une quelconque des revendications précédentes, dans lequel le cadre de retenue (10) est réalisé de façon aplatie dans des zones sans moyens mécaniques d'orientation et/ou de connexion (30) et sans moyens de connexion électrique (40 à 43) ou est muni d'un évidement s'étendant dans la direction circonférentielle, dans lequel l'évidement traverse le matériau du cadre de retenue (10) vers l'extérieur afin de réaliser une ouverture pour la ventilation de face arrière de ladite au moins une cellule solaire.

33. Système solaire selon l'une quelconque des revendications précédentes, dans lequel les moyens de connexion mécanique (30) et/ou la fiche de connexion (40 à 43, 70 à 74) sont prévus sur des côtés longitudinaux opposés du module photovoltaïques (1) rectangulaire ou carré dans des positions identiques, de telle sorte que les modules photovoltaïques (1) peuvent au choix être montés dans différentes positions de rotation sur les supports de montage (50) afin de permettre un câblage électrique approprié des modules photovoltaïques (1) en correspondance avec leur position de rotation respective.

34. Système solaire selon la revendication 33, dans lequel les moyens de connexion mécanique (30) et/ou les fiches de connexion (40 à 43, 70 à 74) sont prévus sur des côtés longitudinaux opposés du module photovoltaïque
(1) rectangulaire ou carré dans des positions identiques, de telle sorte que dans une première position de rotation une connexion électrique peut être réalisée avec un module photovoltaïque adjacent horizontalement, et dans une deuxième position de rotation différente, qui, est tournée de préférence de 180° par rapport à la première position de rotation, une connexion électrique peut être réalisé avec un module photovoltaïque (1) adjacent verticalement.

35. Système d'électricité solaire selon l'une quelconque des revendications précédentes, dans lequel le cadre de retenue est en affleurement avec un disque de recouvrement (2) transparent, formant un côté avant du module photovoltaïque (1).

36. Système d'électricité solaire selon l'une quelconque des revendications précédentes, dans lequel dans le cadre de retenue (10), en outre au moins une diode de dérivation est coulée ou moulée qui est exploitée dans la direction inverse lorsque le module photovoltaïque (1) associé est illuminé.

37. Système solaire selon l'une quelconque des revendications précédentes, comprenant en outre un module onduleur (90) qui présente un aspect extérieur identique ou adapté aux modules photovoltaïques (1) et est monté de façon identique sur le ou les support(s) de montage (50).

38. Système solaire selon la revendication 37, dans lequel le module onduleur (90) présente un disque de recouvrement (2') dont la couleur est adaptée au disque de recouvrement transparent (2) avec l'agencement de cellules solaires (3), muni d'un film sur la face arrière et se trouvant sous le disque, d'un module photovoltaïque, dans lequel sur une face arrière du disque de recouvrement (2'), un onduleur (93) est retenu et un cadre de retenue (10) en matière plastique de préférence élastomère encadre le disque de recouvrement (2') au bord au moins par endroits et retient le disque de recouvrement (2').

39. Système solaire selon la revendication 38, dans lequel entre le disque de recouvrement transparente (2') du module onduleur (90) et un onduleur (93), un interstice est réalisé afin de permettre une évacuation de chaleur perdue provenant de l'onduleur (93) par convection d'air.

40. Système solaire selon l'une quelconque des revendications précédentes, dans lequel les éléments de retenue (60 ; 100) comprennent des moyens de compensation élastiques pour diminuer l'introduction de tensions dans les modules photovoltaïques.

41. Système solaire selon l'une quelconque des revendications 5 à 7, dans lequel le mécanisme d'enclenchement ou de verrouillage est en outre conçu pour précontraindre le module photovoltaïque ou les moyens de connexion mécanique (30) associés dans une position de retenue contre l'élément de retenue (100) ou les supports de montage (50).
